# EUROPEAN PATENT APPLICATION

(11) **EP 4 671 816 A1**
(43) Date of publication of application: **31.12.2025**
(21) Application number: 24184891.0
(22) Date of filing: 27.06.2024
(51) Int. Cl.: G01S 7/481, G01S 7/4863, G01S 7/487, G01S 17/48, G01S 17/89, G01S 7/4914

(54) **OPTICAL SENSING SYSTEM**

(71) Applicant: VoxelSensors SRL, 1000 Brussels (BE)
(72) Inventor: Van Der Tempel, Ward, 3140 Keerbergen (BE); Greenberg, Boris, 6579402 Tel Aviv Jaffa (IL)

(57) **Abstract**

The present invention relates to a method for optical sensing. The method comprises the steps of projecting a light beam (5) onto a scene (4), thereby creating a light spot (8, 9, 10) on said scene, and scanning said light beam (5) on said scene (4) along a trajectory. The method further comprises the step of imaging at least two different parts of said scene (6) simultaneously onto sensing units (3) of a first optical sensor (2), such that each sensing unit (3) of said optical sensor (2) corresponds to at least two different points or areas (8, 8', 8") on said scene (6), wherein each point or area (8, 8', 8") of said at least two different points or areas (8, 8', 8") corresponds to a different part (11, 12, 13) of said at least two different parts (11, 12, 13). The method further comprises the step of determining the location of the light spot (8, 9, 10) on the scene (6), among said at least two different points or areas (8, 8', 8"), based on the instantaneous projection vector direction of the light beam (5) on the scene (6).

## Description

### TECHNICAL FIELD

The present invention relates to an optical sensing system and to a method for optical sensing of a scene.

### BACKGROUND

Optical sensors are known in the art. In many cases, such sensors are made of a plurality of pixels. Such optical sensors have many applications, one of which is wearable devices, for example AR/VR glasses. One the one hand, it is desired to have a large field of view, thereby allowing a better experience for the user. On the other hand, this requires an optical sensor with a large footprint, which is neither practical nor desired for many applications, especially wearable devices.

Moreover, having an optical sensor with a small footprint is desirable because it reduces power consumption. This is because, in many cases, only a small part of the sensor detects light at one time instance, while the pixels on the other part are stand-by to detect potential light in the upcoming time instances. However, pixels which are on stand-by also consume power, even at times in which they do not detect light.

Typically, the size and cost of sensing solutions are important drivers for adoption of the technology in domains such as mobile and consumer electronics. This limits the acceptable sensor active area that can be afforded in the system. Given a certain pixel pitch, which is defined by the process technology node available, the maximum pixel density of the sensor is defined and limited accordingly.

Specifically for 3D sensing systems based on triangulation, the angular resolution per pixel will define the ranging performance. The higher the angular resolution per pixel (i.e. each pixel corresponds to less degrees), the better the measurement of disparity will be, and in turn the better the measurement of the distance will be. Given a required system field of view, and given a maximum affordable pixel count of the sensor, the angular resolution is currently limited to the ratio of the field of view to the pixel count, when using traditional imaging lenses.

There is a need therefore for a compact optical sensing system, which at the same time has a sufficiently large field of view. The present invention aims to resolve at least in part the problems mentioned above.

### SUMMARY OF THE INVENTION

It is an object of embodiments of the present invention to overcome the limitations discussed above and obtain a better angular resolution per pixel while at the same time obtaining the desired field of view, by taking advantage of the specific system properties of laser beam triangulation as a measurement method, and thus to achieve a compact sensing system. This is particularly advantageous for wearable devices, for example AR/VR/XR headsets, which require a compact system with small footprint.

In a first aspect, the present invention relates to a method for optical sensing of a scene (6), the scene being defined at least by two orthogonal dimensions X and Y, the method comprising the steps of :
- defining at least two parts (11, 12, 13) of the scene (6) wherein the parts (11, 12, 13) have at least one dimension smaller than a dimension X,Y of the scene (6);
- providing a first optical sensor (2) comprising a plurality of sensing units (3), the first optical sensor being adapted for imaging each of the parts (11, 12, 13) of the scene said optical sensor (2) having sensing units (3) corresponding to at least two different points or areas (8, 8', 8") of said scene (6), wherein each point or area (8, 8', 8") of said at least two different points or areas (8, 8', 8") corresponds to a different part (11, 12, 13) of said at least two different parts (11, 12, 13) ;
- projecting a light beam (5) on the scene (6) thereby creating a light spot (8, 9, 10) on the scene (6) and scanning the light beam (5) along a path such as to scan at least partially each part (11, 12, 13) of the scene (6);
- imaging/detecting each light spot (8, 9, 10) scanned on each part (11, 12, 13) of the scene (6) onto the optical sensor (2) ; and
- determining the positions of light spots (8, 9, 10) projected on each part (11, 12, 13) of the scene (6) at any time of scanning on basis of:
   ∘ a determined position of the projection vector direction of the light beam (5) on the scene (6) at the time of scanning and/or;
   ∘ a measurement of light spot (8, 9, 10) positions by a sensing unit (3) of the optical sensor (2) at the time of scanning.

According to the invention, the resolution and/or the size of the first optical sensor must be enough to image one of each of the parts of the scene. Therefore, the use of an optical sensor of bigger dimensions for imaging the whole scene is not required.

Preferably, the method according to the invention comprises the steps of
- defining a virtual size of a virtual optical sensor adapted for imaging the whole scene; and
- defining a size of the first optical sensor adapted for imaging one of the at least two parts of the scene, wherein the size of the first optical sensor is smaller than the size of the virtual sensor.

An advantage of the present invention is that a compact optical sensor and optical sensing system can be obtained, since each sensing unit is used to detect reflected light from different parts in the scene, thereby requiring fewer sensing units and smaller optical sensor. Advantageously, the size of the optical sensor and the optical sensing system can be reduced of at least 20% or at least 30% or at least 40% or at least 50% compared to prior art devices since different parts of the total field of view (also referred herein as the scene) are concurrently imaged on the same optical sensor. These different parts may be substantially different with little or no overlap, or may share substantially parts of their individual field of views. In other words, the invention allows using less pixels, but still getting the same end result.

Since the optical sensor can be smaller and can have a smaller number of sensing units, in comparison to a system in which each sensing unit corresponds to one point in the scene, the number of stand-by sensing units is reduced which consume less power.

Advantageously, the noise is significantly reduced, since the number of sensing units operating at one time instance are less due to shrinking the size of the optical sensor. Therefore, less filtering is needed, and therefore more noise immunity is obtained, as well as less power is consumed on said filtering. It is also advantageous that the latency is reduced since less processing is needed.

An additional advantage of the invention is that per part of the scene, the angular resolution is improved. In other words, the field of view per pixel is reduced and thus the angular resolution per pixel is improved. This is done By overlaying and imaging the separate parts of the scene by the same optical sensing area e.g. imaging at least two different points on one sensing unit.

Advantageously, the angular resolution of the optical sensor can be significantly increased, without causing a huge increase to the power consumption of the sensor or the increase in area of the sensor.

Preferred embodiments of the first aspect of the invention comprise one or a suitable combination of more than one of the following features.

The method preferably comprises the step of providing at least one optic between the scene and the optical sensor, wherein the optic is configured to project an image of each of the parts onto the optical sensor. Alternatively or additionally, a first optic and a second optic are provided, wherein the first optic is configured to image a first part onto the first optical sensor, and a second optic is configured to image a second part onto the first optical sensor.

Advantageously, a more compact system is obtained, with a high angular resolution per pixel.

The method preferably comprises the step of predefining the scanning path (the path along which the scanning is done, sometimes referred to as the trajectory) such that the expected position of the light beam on the scene at any time during scanning is predictable and allows to assess to which part of the scene corresponds an image obtained at the said time of scanning by a sensing unit of the first optical sensor.

Preferably, scanning said light beam starts from a predetermined region or point on said scene.

It is an advantage of embodiments of the present invention that it is possible to estimate the expected position of the light beam at each time instance based on the instantaneous projection vector direction of the light beam. It is an advantage of embodiments of the present invention that the part on which the light beam is illuminating is predictable, and therefore it is possible to know which part of the scene the detections on the sensing units correspond to. In case the scanning starts from a predetermined region, it is an advantage that the optical sensor and the projector start operating at the same point. It is an advantage of embodiments of the present invention that a cost and power efficient system is obtained, while still being able to perceive the scene in full as the scene is scanned.

The method preferably comprises the step dividing the scene in a plurality of parts in a sequential manner along one dimension or along two dimensions sizing the first optical sensor in function of the size of each plurality of parts.

The method preferably comprises the step of configuring said optical sensor in a plurality of rows and columns of said sensing units. Advantageously, filtering is possible based on neighborhood sensing units. Advantageously, error tolerance in detection is improved.

The method preferably further comprises the step of filtering the detection/image of a light spot by a sensing unit at any time during scanning, based on the consecutive detections of a light spot on one sensing unit and/or basedon detections on two neighboring sensing units. For example, filtering the detection determined by one sensing unit, based on the presence of a detection over at least one neighboring sensing unit to said one sensing unit at one time step, or based on the presence of said detection over at least two consecutive time steps. Advantageously, a more reliable detection is obtained.

The method preferably comprises the step of comprising the steps of triangulating detection points of images obtained on said first optical sensor (2) with instantaneous position of said light beam, or comprising the steps of:
- providing a second optical sensor (2') at a predefined distance from the first optical sensor (2), the second optical sensor (2') comprising a plurality of sensing units (3'), wherein the second optical sensor (2') being adapted for detecting/imaging each of the at least two parts (11, 12, 13) of the scene (6);
- imaging at least two parts (11, 12, 13) of the scene (6) simultaneously onto the first optical sensor (2) and onto the second optical sensor (2'); and
- triangulating detection points of images obtained on said first optical sensor (2) with detection points of images obtained said second optical sensor (2') such as to obtain the depth of the scene.

The method preferably comprises the step of constructing the scene (e.g. information defining the scene) progressively as the scene is scanned, based on 3D points obtained from e.g. said triangulation. The 3D points may also be obtained using other techniques such as time of flight. An image of the scene may thereafter be obtained on an image display, but not necessarily. It is an advantage of embodiments of the present invention that information about objects in the scene is obtained in low latency, or almost in real-time.

Each of the scanned light beams in a part of the scene is spaced by a predetermined spacing with respect to the scanned light beams in another part of the scene, such that said light beams do not overlap when overlaying the parts of the scene on one another. It is an advantage of embodiments of the present invention that it is possible to identify, with greater precision, which scanning beam belongs to which part of the scene.

In a second aspect, the present invention relates to a system for optical sensing of a scene, comprising:
- a first optical sensor (2) comprising a plurality of sensing units (3), wherein the optical sensor (2) is adapted for imaging at least two parts (11, 12, 13) of the scene, and such that each sensing unit (3) of said optical sensor (2) corresponds to at least two different points or areas (8, 8', 8") on said scene (6), wherein each point or area (8, 8', 8") of said at least two different points or areas (8, 8', 8") corresponds to a different part (11, 12, 13) of said at least two different parts (11, 12, 13);
- a light beam projector (3) for projecting a light beam on the scene;
- scanning means adapted to scan the light beam on the scene along a trajectory;
- a processor configured for
   ∘ receiving inputs including at least two dimensions X, Y of the scene,
   ∘ defining a plurality of parts of the scene;
   ∘ receiving image/detection data's from the sensing units of the first optical sensor;
   ∘ determining the positions of light spots (8, 9, 10) projected on each part (11, 12, 13) of the scene (6) at any time of scanning on basis of:
      ▪ a determined position of the projection vector direction of the light beam (5) on the scene (6) in at the said time of scanning and/or;
      ▪ an measurement of each light spot (8, 9, 10) position by a sensing unit (3) of the optical sensor (2) at the said time of scanning.

Preferred embodiments of the second aspect of the invention comprise one or a suitable combination of more than one of the following features.

In one embodiment, the optical sensing system further comprises at least one optic between the scene and the optical sensor, wherein the optic is configured to project an image of each of the parts onto the optical sensor. Additionally or alternatively, the optical sensing system comprises a first optic is configured to image a first part of the scene onto the first optical sensor, and a second optic is configured to image a second part of the scene onto the first optical sensor. The optical sensing system may comprise further optics associated with further parts of the scene and configured to image those further parts onto the optical sensor.

Advantageously, a compact system and a high angular resolution per pixel can be obtained.

In any one of the embodiments, the sensing units are preferably photo detectors, more preferably single photon detectors, even more preferably single photon avalanche detectors (SPAD). Advantageously, such detectors provide a fast detection of the position of the light beam on the scene.

In any one of the embodiments, the sensing units of the optical detector are preferably arranged in line or preferably in an array of rows and columns.

In any one of the embodiments, the processor is configured for filtering the detection/image of a light spot by a sensing unit at any time during scanning, based on consecutive detection/imaging of a light spot by a sensing unit and/or detection/imaging by a sensing unit and the vicinal sensing unit thereto.

Filtering signals detected by sensing units based on consecutive signals received from sensing units and/or signals received at two neighboring sensing units allows to reduce detection errors that may come from ambient light or unwanted light perturbations.

In one embodiment, the optical sensor system further comprises a second optical sensor at a predefined distance from the first optical sensor, the second optical sensor comprising a plurality of sensing units, wherein the second optical sensor is adapted for detecting/imaging each of the at least two parts of the scene;
the processor being further configured for receiving image/detection data's from the sensing units of the second optical sensor, and for triangulating detection points of images obtained on said first optical sensor with detection points of images obtained said second optical sensor such as to obtain the depth of the scene.

In any one of the embodiments, the processor is preferably configured for providing output data's of a three dimensional image of the scene (6) e.g. to an image display, and/or to a wearable device allowing a user to perceive a scene in 3D.

Preferably, the processor is configured to define a scanning path along the scene and computing projection vector direction of the light beam for any time of scanning.

In a third aspect, the present invention relates to a wearable device (e.g. headset) comprising the optical sensing system as described herein. In one embodiment, the headset can be a wearable device that can be mounted on the head of a user, such as an AR/VR/XR glasses. In one embodiment, the optical sensing system may comprise an optical sensor which is mounted on one side of the glasses (or headset, or wearable), and a laser source which is mounted on another side of the glasses.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

In a fourth aspect, the present invention relates to a system for optical sensing, comprising:
- at least a first optical sensor, wherein said optical sensor comprises a plurality of sensing units, and each sensing unit comprises a photo detector,
- a projector adapted to project a light beam on a scene, thereby creating a light spot on said scene,
- scanning means adapted to scan the light beam on said scene along a trajectory, and
- optics adapted to image a scene observed from at least 2 different viewpoints simultaneously onto said optical sensor, such that each sensing unit of said optical sensor corresponds to at least two different points on said scene, and such that each light spot on said scene creates at least two light spots onto said optical sensor,
wherein said system is adapted determine the distance between the system to the light spot in the scene by determining the distance in pixels between the at least two light spots projected onto the optical sensor, preferably improved by the estimated instantaneous projection vector direction of the light beam on the scene.

Preferably the embodiment of the fourth aspect of the invention comprises two imaging optics organized such that there is a paralax between the viewpoints of said imaging optics, whereby said imaging optics project an image of the scene on a substantially similar optical sensor. In this way, the disparity or distance in the image plane between the projected spots onto the optical sensor is a measurement of the distance to the light spot in the scene. In this way a compact stereoscopic system is created using a single optical sensor. As a result, all required information to compute a depth measurement is created by the same optical sensor and a depth reconstruction computational pipeline can be implemented which does not necessarily rely on external information (which for example comes from a separate sensor in typical stereoscopic system). Any feature of the fourth aspect may be as correspondingly described in the first and second aspects.

### DESCRIPTION OF THE FIGURES

The disclosure will be further illustrated by means of the following description and the appended figures.

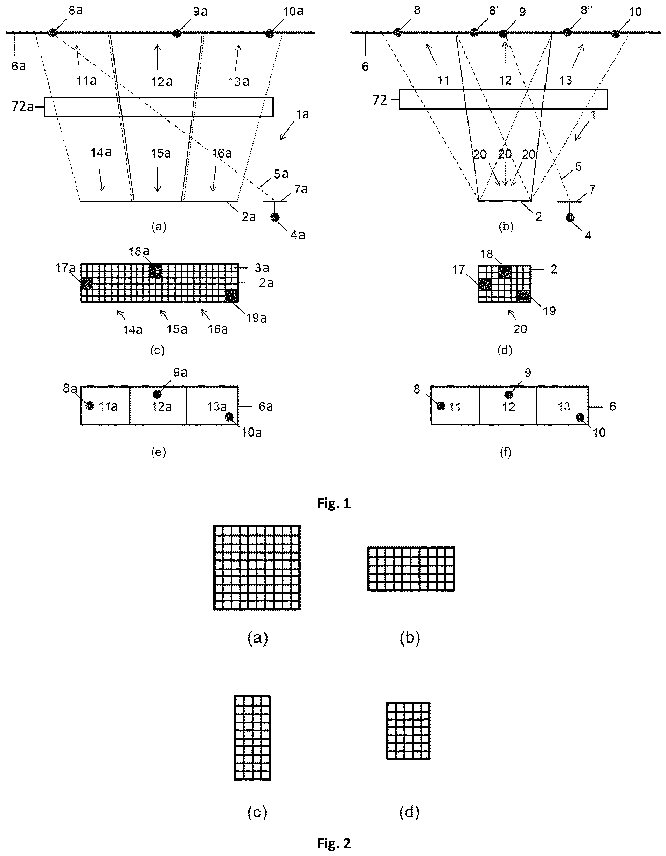

Fig. 1 (a) shows a schematic view of a comparative optical sensing system, without field folding.
Fig. 1 (c) shows a schematic view of the layout of an optical sensor of the comparative optical sensing system of Fig. 1 (a) and Fig. 1 (e) shows a schematic view of a scene imaged by the comparative optical sensing system of Fig. 1(a).
Fig. 1 (b) shows a schematic view of an optical sensing system according to an embodiment of the invention, with field folding.
Fig. 1 (d) shows a schematic view of an optical sensor of the optical sensing system of Fig. 1 (b) and Fig. 1 (f) shows a schematic view of a scene imaged by the optical sensor system of Fig. 1 (b).
Fig. 2 (a) shows a schematic view of an optical sensor of a comparative optical sensor, and Fig. 2 (b), (c) and (d) show schematic views of various embodiments of optical sensors of an optical system according to the invention.
Fig. 3 and 4 show a schematic view of a scene divided in a plurality of parts wherein some parts are spotted by a light beam, with a schematic view of layouts of a comparative optical sensor (a)-(d) and schematic views of layouts of optical sensors of an optical sensor system according to a first embodiment of the invention (a')-(d') and according to a second embodiment of the invention (a")-(d").
Figures 5 to 10 show different parts of a scene (6) being imaged on an optical sensor (2), using different optical components arranged in different fashions, according to embodiments of the present invention.
Figure 11 shows a schematic view of an embodiment of an optical sensing system (60), comprising two optical sensors (2, 2') according to the present invention.
Figure 12 (a) shows the shape of a light spot as seen by an optical sensor of an optical sensing system according to the invention, without applying corrections on the beam.
Fig. 12 (b) shows the shape of a light spot as seen by an optical sensor of an optical sensing system according to the invention, with corrections applied on the beam.
Figure 13 shows the light beams with a predetermined spacing in between, according to embodiments of the present invention.
Figure 14 shows the light spot being imaged by two different optics having two different focal lengths, according to embodiments of the present invention.

The drawings presented herein are illustrative for the present invention and are not to scale.

Any reference signs in the claims shall not be construed as limiting the scope. In the different drawings, the same reference signs refer to the same or analogous elements.

### DETAILED DESCRIPTION

The present invention relates to a system and method for optical sensing, by field folding.

In a first aspect, the present invention relates to a method for optical sensing of a scene defined by at least two orthogonal dimensions X, Y. At least two parts (11, 12, 13) of the scene (6) are defined and the parts (11, 12, 13) have at least one dimension smaller than a dimension X,Y of the scene (6). The method comprises the step of providing a first optical sensor (2) comprising a plurality of sensing units (3), the first optical sensor being adapted for imaging each of the parts (11, 12, 13) of the scene.

The method comprises the step of projecting a light beam onto a scene, by means of a projector. The light beam creates a light spot on the scene having a predetermined spot size, said spot may for example be dot-shaped or a semi-dot or disk-shaped or a collection of dots or any other suitable shape. Knowing the shape of the light spot is advantageous for filtering purposes (e.g. neighborhood and persistence filtering) as discussed below. The method comprises the step of scanning said light beam on said scene along a trajectory, by means of a scanner. Scanning may be for example in a Lissajous pattern or a raster scan, or the like, for example a repetitive projection pattern. The scanning means may for example be a MEMS scanner or a mirror, or an optical phase array, or meta surface approach beam scanning, or the like. For example, scanning between two extreme vertical lines (e.g. one on the extreme right, and one on the extreme left) defining the scene in the horizontal direction, and two extreme horizontal lines (e.g. one on the extreme top, and one on the extreme bottom) defining the scene in the vertical direction.

The light beam may be continuous or pulsed, and the present invention can work with either. It is however preferrable to use a pulsed light beam (e.g. a pulsed laser) since the power is concentrated in the pulse i.e. each pulse has a higher power while maintaining the same average power, thereby allowing easier detection and filtering. Also, using a pulsed light beam is advantageous when using persistence or neighborhood conditions (explained below) for better filtering, as it allows to check said conditions based on the pulse length, instead of based on observation windows as in the case of a continuous pulse, which is typically longer than the pulse length.

The method comprises the step of imaging at least two different parts of the scene onto sensing units of a first optical sensor. Each sensing unit comprises a photo detector. Said imaging is done such that each sensing unit of said optical sensor correspond to at least two different points or areas on said scene (or any other shape corresponding to a kernel on the sensor), wherein each point or area of said at least two different points or areas corresponds to a different part of said at least two different parts. For example, a first point in a first part corresponds to a first sensing unit, and a second point in a second part corresponds to the same first sensing unit. Imaging is done, for example, by means of the appropriate optics, imaging the reflected light from the scene onto the optical sensor. For example, the light is reflected, after hitting objects in the scene, imaged by said optics, and finally received by the first optical sensor e.g. by the corresponding sensing unit to the point on the scene. In other words, such optics ensure the reflected light reaches the corresponding sensing unit.

The method comprises the step of determining the location of detection on said optical sensor. The positions of light spots (8, 9, 10) projected on each part (11, 12, 13) of the scene (6) at any time of scanning are determined on basis of:
o a determined position of the projection vector direction of the light beam (5) on the scene (6) at the said time of scanning and/or;
o a measurement of light spot (8, 9, 10) positions by a sensing unit (3) of the optical sensor (2) at the said time of scanning.

The determination of the location of the light spot on the scene, among said at least two different points or areas is based on the estimated or measured instantaneous projection vector direction on the light beam on the scene. For example, after detecting the light spot by a sensing unit, it is needed to identify whether the light spot was present on the first part or the second part, since there are two points, one in each part, that correspond to the same sensing unit. In other words, this allows to identify whether the detection by the sensing unit corresponds to the point in e.g. the first part, or the second part. This is done using information of the light source and scanner, namely the instantaneous projection vector direction, either measured or estimated.

Making each sensing unit corresponding to at least two points of different parts of the scene allows to reduce the size of the optical sensor. For example, instead of dimensioning the first optical sensor to receive the reflected light from the complete scene, wherein each sensing unit corresponds to one point in the scene, thereby needing an optical sensor of large size, this method suggests "folding" the scene, such that each sensing units correspond to two or more points in the scene, therefore allowing to reduce the size of the optical sensor. For example, each sensing unit corresponds to two or three or four or more points in the scene, therefore allowing shrinking of the size of the sensor two or three or four or more times.

In the method according to the invention, the scene is defined by at least two orthogonal dimensions, preferably the scene is defined by a length and a height. A virtual optical sensor adapted for imaging the whole scene is defined. The term "virtual optical sensor" or "theoretical optical sensor" refers herein to an optical sensor having theoretical dimensions and resolution adapted for imaging a whole scene of given dimensions. The size of the first optical sensor used herein is defined to be smaller than the size of the virtual optical sensor, such that the first optical sensor is adapted to image one part of the at least two parts of the scene.

In one embodiment of the method, one dimension X of the scene is divided by a factor Fx, such that Fx parts of the scene are defined, then the first optical sensor is defined such as one of its dimensions relative to the dimension of the defined virtual optical sensor is divided by the factor Fx. In another embodiment of the method, a first dimension X of the scene is divided by a factor Fx, and a second dimension Y of the scene is divided by a factor Fy, such that Fx•Fy parts of the scene are defined, then the first optical sensor is defined such as a first of its dimension relative to the dimension of the defined virtual optical sensor is divided by the factor Fx and a second dimension relative to the dimension of the defined virtual optical sensor is divided by a factor Fy. In that way, the area of the first optical sensor can be shrink by a factor Fx, Fy or Fx•Fy relative to the dimensions of the defined virtual optical sensor.

In one embodiment of the method, the scanning path (or trajectory) is predefined such that the expected position of the light beam on the scene at any time during scanning is predictable and allows to assess to which part of the scene corresponds an image obtained at the said time of scanning by a sensing unit of the first optical sensor. For example, since the scanning trajectory is continuous, and knowing the size of each part of the scene, it is possible to know at each point which part the detection belongs to. This can also be done by knowing the trajectory of the light, and knowing how the scanned beams change their scanning direction e.g. on the edges of the scene, as explained below and in the figures.

Alternatively, the instantaneous projection vector direction can be estimated. For example, the instantaneous (i.e. at any time during scanning) projection vector direction of said light beam can be obtained from the projector (for example by monitoring or measuring the orientation of the beam), and therefore it is possible to know where the light spot is falling in the scene, and therefore which part of the scene the light spot belongs to.

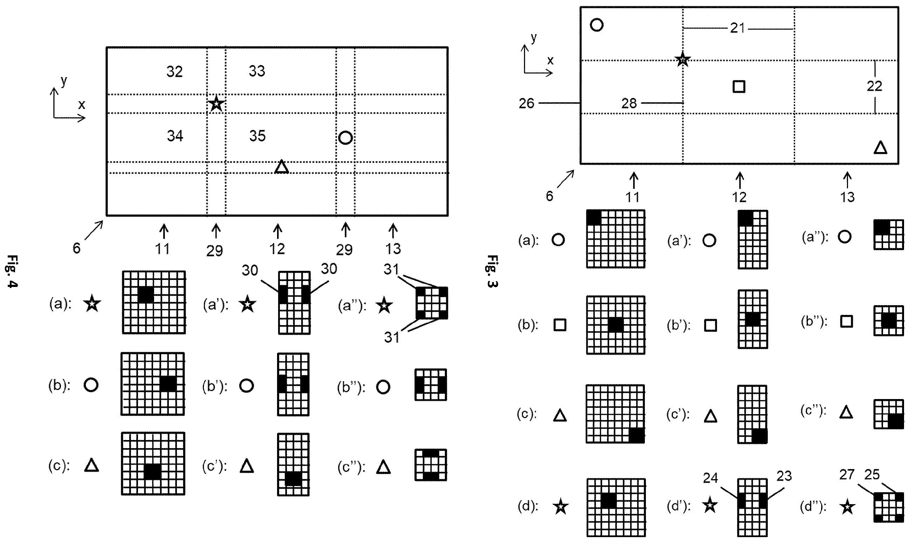

For example, let us assume the scanning path is predefined and two parts of the scene are defined: a first part and a second part, ordered from the left to the right, and the light beam is scanning from the middle of the second part, towards the left direction. In this case, it is known that after reaching the left edge of the second part, the light beam will transition to the right edge of the first part, therefore the detection would jump from the sensing unit at the extreme left (corresponding to the extreme left edge of the second part), to the sensing unit at the extreme right (corresponding to the extreme right edge of the first part). Thereafter, when the scanning reaches the extreme left of the first part, and subject to the scanning fashion and trajectory, the scanning speed slows down and reverses the scanning direction back towards the right side. Since it is known that the left edge of the first part is the left edge of the scene, it can be concluded that the part on which the light beam is illuminating would remain the first part. For example, the method comprises the step of identifying the part of the scene on which the light beam is scanned, based on the trajectory of the scanning beam. This is particularly important in case of overlapping field of views of the first and second parts, as shown in figures 4-5.

It is also important to know how the movement of the light beam in the scene maps on the sensing units e.g. a certain movement of the light beam in the scene results in a certain movement of the detection on the optical sensor, therefore allowing to know at each time step which part of the scene the detection corresponds to.

In other words, the light beam has a projection vector, wherein said vector has a direction at each time instant. By knowing the projection vector direction of the light beam from the scanner to the scene, it is possible to determine which part the detections correspond to.

This method allows reducing the power consumption and therefore obtain a power efficient system, since the same scene is perceived with a smaller optical sensor. As a result of reducing the size of the optical sensor, less filtering is needed (and lower power is needed for said filtering, and lower latency due to requiring less processing), therefore allowing to obtain a more noise resistant system. This method also reduces the number of stand-by sensing units which would otherwise consume power.

The method also allows obtaining a high angular resolution per pixel, since each sensing unit corresponds to more than one point of the scene. For example, such an optical sensor is capable of detecting very small objects and e.g. sharp edges and complex shapes.

The method according to the invention preferably comprises the step of providing at least one optic between the scene and the optical sensor, wherein the optics is configured to project an image of each of the parts onto the optical sensor.

Preferably, the method comprises the step of imaging said at least two parts, by means of one optics, onto said optical sensor. For example, using a prism-like optics, or mirrors, or a combination thereof, or other optics able to guide images of both parts of the scene to the same optical sensor, as illustrated in the figures below.

In one embodiment of the method, the method comprises providing a first optic configured to image a first part onto the first optical sensor, and a second optic is configured to image a second part onto the first optical sensor. In some embodiment, further optics can be provided to image further parts of the scene associated therewith.

The method can comprise imaging each of said at least two parts, by means of one corresponding optics to said part, onto said optical sensor. For example, each part has a corresponding optics, wherein said corresponding optics images said corresponding part, on the optical sensor. For example, a first optics corresponds to a first part image said first part on the optical sensor, and a second optics corresponds to a second part image said second part on the optical sensor, wherein the images are overlayed.

In another example, each of the optics associated with each of the different parts images said parts on one optics, which images the two parts on the optical sensor. For example, a first optics corresponds to a first part image said first part on a third optics, and a second optics corresponds to a second part image said second part on the third optics, wherein the images are overlaying.

Although the images are overlayed on each other, since it is known where the light beam is illuminating in the scene, it is possible to determine to which part each point corresponds to. Furthermore, the light spot is distinguishable from the noise for example by means of neighborhood of persistence filtering).

Another way of looking at it is that the scene is angularly split. For example, if the scene is split into two parts, and assuming 70 degrees field of view, then each part has a 35 degrees angle field of view.

Preferably, the method comprises the step of synchronizing said projector with said optical sensor. For example, information from the projector on the instantaneous position of the light beam is continuously being sent to the sensor e.g. by assistance of a processor. For example, the projector and the optical sensor share the same clock. This allows the optical sensor to know (with assistance of a processor) easily and in real-time the instantaneous position of the light beam on the scene and therefore to know which part of the scene the detection corresponds to. For example, a feedback loop is provided from said projector to said optical sensor. However, this is not always necessary, as will be explained below.

Preferably, scanning said light beam starts from a predetermined region on said scene. For example, predefining the instantaneous position of the light beam on the scene at each time step along the trajectory, and therefore knowing in advance where the light beam will be at each time step. This provides a possible starting point of operation for the optical sensor and the projector i.e. allows indirect synchronization between the optical sensor and the projector i.e. synchronization without having a link between the optical sensor and the projector. Normally there is a need for synchronization between the projector and sensor i.e. they should have the same clock so that it is possible to easily correspond one laser emission to one detection. However, by starting the scanning from a predetermined region, it is possible to avoid the need for such synchronization. Said predetermined region is preferably a point substantially in the middle of the scene or what is referred to as zero-crossing, which point is easy to refer to. In other words, by knowing the starting instant of scanning, the starting position of scanning, the instantaneous position of scanning, and the overall trajectory, it is possible to indirectly synchronize the projector to the optical sensor, without having a direct synchronization link between the optical sensor and projector. However, in some cases, a direct synchronization link may still be needed, for example to compensate for frequency mismatch. As a result, it is possible to know which sensing units to activate or deactivate at each time step. Alternatively, the projector provides a characteristic signal which is detected by the optical sensor, the characteristic signal allowing the optical sensor to know when the operation will start, after which the predefined trajectory is known to the optical sensor. This can be done with the assistance of a processor.

A further way of determining the part to which the detection relates, is by knowing at which points a certain scanning trajectory would cross, it is possible to determine the part to which the detection relates. In other words, by knowing the scanning pattern, it is possible to distinguish whether the detection is e.g. on the first or second part.

Alternatively to predefining the trajectory, the method preferably comprises the step of analyzing (e.g. by means of a processor, for example based on artificial intelligence) the trajectory and predicting based thereon the instantaneous position at each time step, and based thereon determine which part of the scene the detection corresponds to. For example, in case the trajectory repeats itself after a certain time span or in case the trajectory is predictable. The advantage is that synchronization between the optical sensor and the projector is no longer needed. For example, the zero-crossing may provide information on the frequency and phase of the light beam.

Preferably, the method comprises the step of defining said at least two different parts in a sequential manner along one direction. For example, one part is at one end of the scene, and another part is at the other end of the scene, and the rest of the parts (if any) are defined in between. For example, one end of the optical sensor corresponds to the part at one end of the scene, and another end of the optical sensor corresponds to the part at the other end of the scene. For example, the parts are arranged next to each other in a vertical direction, or in a horizontal direction. In this case, for example, each sensing unit corresponds to one point of each of said parts, for example, for a scene defined by three equally divided parts along its length, the top-left sensing unit of the optical sensor corresponds to the top-left point of the first part of the scene, to the top-left point of the second part of the scene, and to the top-left point of the third part of the scene. This arrangement allows perceiving the complete scene.

In one embodiment of the method, at least different parts of the scene are defined in a sequential manner along two directions. For example, the parts are arranged in a matrix-like arrangement. For example, a number of parts of the scene are defined sequentially in the vertical direction, and each of said parts of the scene are also arranged sequentially in a horizontal direction, so as to create a matrix-like of parts of the scene. In this case, for example, each sensing unit corresponds to one point of each of said parts. For example, in case of a scene having nine parts, the bottom-right sensing unit corresponds to the bottom right point of each of the parts of the scene. This embodiment allows further shrinking of the optical sensor.

Preferably, the method comprises the step of providing an optical sensor comprising a plurality of rows and columns of sensing units. The number of rows is preferably chosen such that a spot size (of the light spot) is completely detected by at least one (or preferably at least two neighboring) sensing unit of the optical sensor. This allows filtering based on neighborhood detections e.g. to exclude single isolated detections caused by noise. This also provides some error tolerance in case the photons were not detected by the predicted sensing units, but by sensing units which are neighboring thereto. For example, the number of rows and columns may be chosen as suitable to compensate for errors and to make sure of receiving the light by the optical sensor.

Preferably, the method comprises the step of filtering the detection/image of a light spot by a sensing unit at any time during scanning, based on the last detection/image of a light spot and/or the next detection/image of a light spot on a vicinal sensing unit. Filtering the detection determined by one sensing unit can be based on the (positive) detection over at least one neighboring sensing unit vicinal to one sensing unit at one time step, and/or based on the (positive) detection by one sensing unit over at least two consecutive time steps. This allows reliable detection. For example, a noise signal would neither, in most cases, appear over many neighboring pixels, nor appear on the same pixel over multiple consecutive time steps. Filtering is particularly advantageous for this invention as it makes it easier to distinguish the active light from the noise, and therefore makes it easier to determine which part of the scene the illumination corresponds to.

In one embodiment, the method comprises the step of
- providing a second optical sensor (2') at a predefined distance from the first optical sensor (2), the second optical sensor (2') comprising a plurality of sensing units (3'), wherein the second optical sensor (2') being adapted for detecting/imaging each of the at least two parts (11, 12, 13) of the scene (6) ;
- imaging the at least two parts (11, 12, 13) of the scene (6) simultaneously onto the first optical sensor (2) and onto the second optical sensor (2') ; and
- triangulating detection points of images obtained on said first optical sensor (2) with detection points of images obtained said second optical sensor (2') such as to obtain the depth of the scene, or triangulating detection points of images obtained on said first optical sensor (2) with instantaneous position of said light beam.

Triangulation of detection points of said first optical sensor with instantaneous position of said light beam or with detection points of a second optical sensor allows obtaining the depth of objects in the scene. Since the detection relies on the instantaneous position of the light beam e.g. of the instantaneous position of the emitted light of the projector, the need for stereo-matching is eliminated, for example between the light source and the first optical sensor, or between the first optical sensor and a second optical sensor. For example, the image in the first optical sensor can be matched to the image in the second optical sensor, for example using said light spot as a reference, without need for stereo-matching.

Preferably, the method comprises the step of constructing the scene progressively i.e. as the scene is scanned, based on 3D points obtained from e.g. said triangulation. In other words, one 3D point is obtained at each time step, such that the scene and information thereof is progressively obtained. This allows low latency operation and real-time knowledge of objects in the scene. This is also particularly advantageous in allowing to know which part of the scene the light spot corresponds to, which would be impossible using a camera of the prior art which accumulates the light over a long period.

Preferably, each of the scanning path in a part of the scene is spaced by a predetermined spacing with respect to scanning path in another part of the scene, such that said scanning paths in a first part and in a second parts do not overlap when overlaying the parts of the scene on one another for reconstructing the (image of, or depth of, or other information of) the whole scene. This is advantageous in identifying, with greater precision, which scanning beam belongs to which part of the scene. For example, the scene can be scanned horizontally from one side to the other side, by shifting the vertical position of the scanning path from a first part of the scene to a second part of the scene, such that the linear image of one part do not overlap with the linear image of another part when reconstructing the image of the whole scene. Scanning a Lissajous pattern would be more complex, but the concept remains the same. To achieve this, optics and lenses are designed for this purpose, such that each part of the scene receives the light beam with a scanning path shifted from a scanning path on another part of the scene. For example, appropriate lenses or optics having a certain distortion can be provided between the projector and the scene to achieve this.

In one embodiment, the method further comprises the step of imaging more than one part, for example multiple parts or most or all the parts of said scene, onto sensing units of a first optical sensor. This is advantageous in knowing at which point in the scene the light spot is falling, hence identifying the part of the scene being illuminated. For example, some optics have a global field of view, while other optics have a partial field of view i.e. being directed to one part of the scene. As a result, the image of the beam as seen by the optical sensor, when the optics have a partial field of view would move faster than the image of the beam as seen by the optical sensor, when the optics have a global field of view, hence it is possible to differentiate between the two beams. Optics with different configurations and properties may be used e.g. lenses with different focal lengths. For example, a shorter focal length would allow having a larger field of view.

Preferably, each light beam has a unique temporal stamp, for example a unique duty cycle or a temporal width or other properties of the light beam, such that it is possible to distinguish from different light beams, for example in case the system has more than one light beam, or in case other light beams from other systems are present in the scene. This way it is possible to know the genuine location or index of the light beam on the scene with great accuracy, especially in presence of multiple light beams.

Preferably, the method comprises the step of projecting a light beam of high power at the far field (e.g. above a predetermined distance), and a light beam of lower power at the near field (below said predetermined distance. For example, by means of two light sources, one source illuminates the near field, and the other source illuminates the far field. Alternatively, by means of one light source and a beam splitter, for example splitting the power such that the far field is illuminated by a beam of high power, and the near field is illuminated by a beam of low power. Having two light sources is advantageous in case the interest is only in one of the two: near field or far field. For example, if the interest is in the near field only, then it is not needed to illuminate the far field, hence reducing the power consumption.

Having two light sources directed differently (i.e. at near and far fields), allows getting an overlap between the light beam and the field of view of the optical sensor at both near field and far field. Otherwise, if only one light source is directed at the far field, then there would not be an overlap between the light beam and the field of view at the near field, hence not allowing to perceive the scene at shorter distances.

Having two light sources directed differently (i.e. at near and far fields), also allows to reduce the circle of confusion for the near field and for the far field, hence focusing the light properly depending on the distance.

In a second aspect, the present invention relates to an optical sensing system for optical sensing of a scene comprising:
- a first optical sensor (2) comprising a plurality of sensing units (3), wherein the optical sensor (2) is adapted for imaging at least two parts (11, 12, 13) of the scene;
- a light beam projector (3) for projecting a light beam on the scene;
- scanning means adapted to scan the light beam on the scene along a trajectory;
- a processor configured for
   ∘ receiving inputs including at least two dimensions X, Y of the scene,
   ∘ defining a plurality of parts of the scene;
   ∘ preferably, defining a scanning path along the scene and computing projection vector direction of the light beam for any time of scanning;
   ∘ receiving image/detection data's from the sensing units of the first optical sensor;
   ∘ determining the positions of light spots (8, 9, 10) projected on each part (11, 12, 13) of the scene (6) at any time of scanning on basis of:
      - a determined position of the projection vector direction of the light beam (5) on the scene (6) in at the said time of scanning and/or;
      - a measurement of each light spot (8, 9, 10) position by a sensing unit (3) of the optical sensor (2) at the said time of scanning.

The projector is preferably a light source adapted to generate a light beam which generates a light spot on said scene (i.e. on the field of view of the optical sensor).

The scanning means is adapted to scan the light beam on said scene along a trajectory (or path). Said trajectory covers a plurality of points (or spot areas) on the scene, wherein at each time step, one point (or spot area) of the scene is scanned. It is preferable to scan as many points (or spot areas) as possible, since this implies more information is obtained in relation to the scene and the depth of each point. Therefore, the scanning path may be a continuous path, but in practice it is more likely to be a non-continuous path i.e. a path made of discrete points. Scanning means is preferably adapted to scan the scene continuously (i.e. repeatedly), such that objects in the field of view of the optical sensor are continuously scanned and identified.

The optical sensing system comprises at least one optic between the scene (6) and the optical sensor (2), wherein the optic is configured to project an image of each of the parts (11, 12, 13) onto the optical sensor (2).

The optic is adapted to image at least two different parts of said scene onto said optical sensor i.e. the optics is able to make an image of at least two parts of the scene on sensing units of said first optical sensor.

Based on the location of the light beam imaged on said first optical sensor, the depth information of the scene may be calculated by triangulation (or other methods).

The optic is configured such to image different points of the scene on the sensing units of said optical sensor. Each of said points corresponds to a different part. In other words, each sensing unit detects light from more than one point of the scene, wherein each point corresponds to a different part.

The reflected light from the scene (e.g. from an object in the scene) is received by at least one sensing unit, after which the optical pulse is translated into an electrical signal or logic pulse. Each pulse is timestamped with respect to a reference clock.

Scanning the scene allows calculating the depth of each point along the trajectory. However, this invention is not limited to obtaining the depth information of objects in the scene, but is generalized to any system performing optical sensing for different purposes, in which information is obtained from different parts of the scene, and based on the instantaneous position of the light beam, the information is analyzed to understand which detection belongs to which part in the scene. For example, the instantaneous position of the light beam is known (or found) for each time step.

Since the detection is based on the light beam, and since there is a significant difference between an illuminated point and a non-illuminated point due to the concentration of the illumination in a small area (e.g. the beam is a dot-like pattern), the system is immune to ambient light. At the same time, it is known where the beam is shining at each moment, therefore a detection in a spot or area in which the beam is not shining at that moment, is likely a false detection. Similarly, since the detection is based on said beam being e.g. dot-like, the power consumption is minimal.

In one embodiment, the optical sensing system comprises a first optic configured to image a first part onto the first optical sensor, and a second optic configured to image a second part onto the first optical sensor. The optical sensing system may comprise a plurality of optics, wherein each optics may be configured to image different parts of the scene. In another embodiment, the system may comprise one optics adapted to image said at least two parts onto the first optical sensor.

The plurality of sensing units of the optical sensor may be arranged in a line, or more preferably in an array of rows and columns.

Preferably, each of the sensing units comprise a photodetector, preferably a single photon detector, more preferably a single photon avalanche detector (SPAD). Alternatively, the sensing units comprise an avalanche photodetector, or avalanche photodiode (APD). Single photon detectors are advantageous since they are fast by nature, and allow to detect the position of the light beam (and the spot it leaves on the scene) in a fast and accurate manner. Single photon detectors also have less energy consumption. In other prior art systems wherein single photon detectors are not used, the slow detection speed of the sensing units is such that a sequence of light beam spots on the field of view appears as a line instead of individual light spots, and therefore may require stereo matching. However, using single photon detectors to detect a light spot (e.g. a dot) that is being scanned, eliminates the need for stereo-matching.

Furthermore, using a single photon detector such as SPAD in the pixels (i.e. sensing units) is advantageous because it is sensitive to a single photon, which means that the active projected structure will need a minimum amount of energy since the detector is single photon sensitive. Another advantage is sub-nanosecond response time of detectors such as SPADs, meaning the photon is detected and encoded into a digital signal in the order of nanosecond or less.

For example, the detector is adapted to output a signal to the processor. The signal is preferably an electrical detection signal upon detection of a photon. For example, a detection signal may be translated into a logic binary signal such as "1" for a detection, and "0" for no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal. Preferably, each photo detector is arranged in a reverse biased configuration.

Preferably, the processor is configured to receive detection data from the first optical sensor and to triangulate detection points obtained by said first optical sensor with the known projection position of said projector.

In one embodiment, the optical sensing system further comprises at least a second optical sensor, for example constructed similarly to the first optical sensor. In that case, the processor is configured to receive detection data from the first optical sensor and from the second optical sensor and to triangulate detection points obtained by said first optical sensor with detection points of said second optical sensor. This allows to obtain the depth information at each point in the scene. The triangulation may also be done between the detection points of one optical sensor, and the instantaneous projection vector direction of the projector.

In an optical sensing system comprising a light source emitting a light beam on a scene (e.g. an environment) and two of optical sensors, wherein said two optical sensors have a shared field of view of the scene, it is possible to convert x-y-time data of the two sensors to x-y-z-time data by triangulation, for each time instant.

Preferably, the processor of the optical sensing system is configured for filtering the detection of a light spot by a sensing unit at any time during scanning, based on consecutive detections of a light spot by one sensing unit and/or by one or more vicinal sensing units.

The filtering applied by the processor allows to reduce false detections. Filtering may be based on expected pulse width, expected dot projection size, detection by one particular sensing unit at one particular time and/or detection by sensing units vicinal to the particular sensing unit during an interval of time before and/or after and/or during the particular time, or checking the persistence of the detections over time.

The processor and/or the optical sensing system may be configured for filtering false-positive signals such as described in WO2021/240455, WO2022/136682, WO2023/281308, and WO2023047245. The plurality of rows and columns of the sensing units are advantageous in allowing such filtering, for example using temporal and/or neighborhood information are described in the referenced documents.

Preferably, the projector is configured for providing a light beam having a wavelength detectable by the sensing units of the optical sensor. The wavelength of the light beam can be comprised between 100 nanometer and 10 micrometer, preferably between 100 nanometer and 1 micrometer. For example, each optical sensor comprises photo detectors able to detect photons impinging on each detector within a wavelength detection window falling within the range of 100 nanometer and 10 micrometer, preferably between 100 nanometer and 1 micrometer. It is also possible to use multiple wavelengths to reduce sensitivity to surface and color, and then have a filter on chip.

Preferably, the system comprises image representation means, also referred herein as image display, for example a screen-like or other image representation devices, so as to reproduce locations of points of said objects in said scene. The processor is configured for providing output data of a three dimensional image of a scene to an image display. Preferably the processor is configured to reconstruct a three dimensional image of the scene to an image display. However, said processor may allow analyzing the scene, for example by extracting features of objects in the scene, without necessarily producing an image of said scene.

Preferably, the optical sensing system is used for 3D vision applications, for example AR/VR (Augmented reality/virtual reality) applications. For example, the system may be used to visualize objects in three dimensions. Alternatively, said optical sensing system may allow analyzing the scene, for example by extracting features of objects in the scene, without necessarily producing an image of said scene. Preferably, the optical sensing system comprises a plurality of optical sensors and/or a plurality of light sources. This is advantageous in creating 3D vision. For example, by triangulating the outputs (i.e. the x-y data) of two such optical sensors (or triangulating data of a light source and an optical sensor) to obtain 3D information (x-y-z data).

Any feature of the second aspect (system) may be as correspondingly described in the first aspect (method). For example, the system of the second aspect is operating based on the method of the first aspect.

Further characteristics and advantages of embodiments of the present invention will be described with reference to the figures. It should be noted that the invention is not restricted to the specific embodiments shown in these figures or described in the examples.

Fig. 1 (a) shows a top view of a comparative optical sensing system (1a), comprising a first optical sensor (2a). The optical sensor (2a) comprises a plurality of sensing units (3a) as shown in Fig. 1 (c), which is a view of an array of sensing units (3a) of the optical sensor (2a). Each sensing unit (3a) comprises a single photon detector, preferably a SPAD. The SPADs output a binary value, for example corresponding to whether a SPAD detects a photon or not. The system (1a) comprises a projector (4a) e.g. a light source, projecting a light beam (5a) on a scene (6a). The system (1a) comprises optics (72a) able to produce an image of the scene (6a) on said optical sensor (2a). For example, the reflected light is reflected from the scene (6a) or from objects therein. The reflected light is imaged on the first optical sensor (2a) by means of said optics. For example, an image is produced on sensing units (3) of said optical sensor (2). The system (1a) further comprises a scanner (7a) capable of scanning the light beam (5a) on the scene (6a) along a trajectory.

The light beam (5a) results in a light spot (8a, 9a, 10a) on the scene (6a). For the sake of example, we consider three light spots: a first light spot (8a), a second light spot (9a), and a third light spot (10a) on different parts of the scene (6a). For example, during the scanning step, three different light spots (8a, 9a, 10a) at different parts of the scene can be obtained, such that the light beam results in a first light spot at a first scanning time t1, a second light spot at a second scanning time t2 and a third light spot at a third scanning times t3. The system (1a) is capable of obtaining the depth of objects in the scene (6a) as the scanner (7a) is scanning the light beam (5a) along the scene (6a). In other words, for each time step, the system (1a) obtains one depth value at the location of the light spot (8a, 9a, 10a). The depth value may be obtained using triangulation (but can also be obtained by other methods such as time of flight, for example), as explained above. The system (1a) is capable of obtaining the depth of objects in the scene (6a) by scanning the light beam (5a) along the scene (6a), imaging and detecting beam spots on the sensing units (3a) and processing the signals received.

Let us assume the scene (6a) is split into three parts (Fig. 1 (e)), a left part (11a), a central part (12a) and a right part (13a). In a comparative optical sensing system, each of said parts (11a, 12a, 13a) is imaged on the corresponding part (14a, 15a, 16a) of the optical sensor (2a) (Fig. 1 (c)).

For example, the left part (11a) of the scene (6a) and the first light spot (8a) thereon is imaged and detected on the left part (14a) of the optical sensor (2a), wherein sensing units (3a) of the optical sensor (2a) have a first detection position (17a) corresponding to the first spot (8a). Similarly, the central part (12a) of the scene (6a) and the second light spot (9a) thereon is imaged and detected on the central part (15a) of the optical sensor (2a), wherein sensing units (3a) of the optical sensor (2a) have a second detection position (18a) corresponding to the second spot (9a). Similarly, the right part (13a) of the scene (6a) and the third light spot (10a) thereon is imaged and detected on the right part (16a) of the optical sensor (2a), wherein sensing units (3a) of the optical sensor (2a) have a third detection position (19a) corresponding to the second spot (10a). Such a comparative system has the disadvantage of requiring a large optical sensor (2a).

Fig. 1 (b) shows a schematic view of an optical sensing system (1) according to an embodiment of the invention. The system (1) comprises a projector (4) comprising scanning means (7) for projecting and scanning a light beam on a scene (6), an optic (72) configured for imaging light spots (8, 9, 10) obtained on each parts (11, 12, 13) of the scene (6) on an optical sensor (2) comprising a plurality of sensing units (3) for detecting the image of the light spots (8, 9, 10) and a processor (not shown) for processing signal received by the sensing units. The sensing units are preferably SPAD. The optical sensing system (1) according to the invention as shown in Fig. 1(b) differs from the comparative optical system (1a) of Fig. 1 (a) in that the optical sensor (2) is smaller. In Fig. 1 (b), the scene is split into three parts (11, 12, 13). Fig. 1 (b) and Fig. 1 (f) represent three light spots (8, 9, 10) obtained on each part from a projection of a light beam (5) at different times of scanning. The optical sensor (2) in Fig. 1 (b) has only one part (20) having the same dimensions and number of sensing units (3) as e.g. the central part (15a) of the optical sensor (2a) of the comparative prior art system of Fig. 1 (a). In this case, the left part (11), central part (12), and right part (13) of the scene (6) and the light spots (8, 9, 10) thereon are all imaged e.g. by an appropriate optic, on the optical sensor (2) of Fig. 1 (b). The sensing units (3) of the optical sensor (2) have a first detection position (17), a second detection position (18), and third detection position (19), as shown in Fig. 1 (d). By knowing (or determining) the position of the light beam (5) at each time step, it is possible to determine to which of the left part (11), central part (12), or right part (13) of the scene (6) corresponds a detection position (17, 18, 19). For example, when the light beam passes through the first part (11) of the scene (6), then the detection position (17) on the optical sensor (2) corresponds to the first light spot (8). When the light beam passes through the second part (12) of the scene (6) the detection position (18) corresponds to the second light spot (9). When the light beam (5) passes through the third part (13) of the scene (6), the detection position (19) corresponds to the third light spot (10). It is noteworthy that the detections (17, 18, 19) happen at different time steps, but are shown together in Fig. 1 for the sake of explanation and illustration. Furthermore, in reality, the fields of each part overlap, as shown in Fig. 4, due to the nature of the imaging optics, unlike the ideal drawing shown in Fig. 1 (a, b) wherein the fields do not overlap. However, by having information about the light beam of the light source, for example being synchronized with the optical sensor, or having information in advance about the light beam e.g. where the scanning starts, and how the trajectory is defined, it is possible to remove the effect of the overlapping parts.

Fig. 2 shows an example on how the field of view of the optical sensor according to the invention can be shrunk (or folded) in different directions (one or more), relative to the optical sensor of a comparative system (that can be also referred as virtual optical sensor). Fig. 2 (a) shows a comparative optical sensor. The Fig. 2 (b) shows an optical sensor of an optical system according to the invention that is shrunk relative to the comparative optical sensor in the vertical direction, Fig. 2 (c) shows an optical sensor of an optical system according to the invention that is shrunk relative to the comparative optical sensor in the horizontal direction. Fig. 2(d) shows an optical sensor of an optical system according to the invention that is shrunk relative to the comparative optical sensor in both vertical and horizontal directions. In other words, the Fig. 2(a) represents a comparative optical sensor comprising an array of 10x10 sensing units and the optical sensors represented in Fig. 2(b), Fig. 2(c) and Fig. 2(d) are examples of optical sensors of an optical sensing system according to the invention, wherein such optical sensors are shrunk relative to the comparative optical sensor of Fig. 2(a) and have a reduced number of sensing units.

In a comparative optical sensing system, a scene can be imaged by a comparative optic on a comparative optical detector such as to obtain an image of the whole scene with a defined resolution.

In an optical sensing system according to the invention, the scene can be divided in a plurality of parts by any desired factor, and the size of the optical sensor can be reduced compared to the comparative optical sensor by the desired factor such as to detect an image of each parts with a defined resolution. Additionally, the optics must be adapted to image each parts of the scene on the optical sensor. The optical sensing system according to the invention can therefore provide an image of the scene with the same resolution as the comparative optical sensing system but with a smaller optical sensor.

For example, the scene can be divided (sometimes referred to as "field folding") into two parts and the optical sensor is reduced by a factor 2 compared to a virtual (comparative) optical sensor, such that each of said parts are imaged on the half-sized optical sensor, wherein the position of each spot on the scene is determined based on the known (or determined) position of the light beam In some embodiments, the reduction factor of the optical sensor may be different than the division factor of the scene. This is also shown in Fig. 2 (c), wherein the optical sensor is reduced to more than half of its size in the horizontal direction, and similarly in Fig. 2 (d), wherein the optical sensor is shrunk by different factors in the horizontal and vertical directions. This is advantageous in case the movement in one direction was more important or prominent than the movement in the other direction, for example in case the movement in the horizontal direction is much more than the movement in the vertical direction, per time step.

Fig. 3 provides illustrations, of a light spot in different locations in the scene (6), and the detection positions of the light spot by a comparative optical sensor (without field folding) in Fig. 3 (a, b, c, d).

Fig. 3 (a', b', c', d'), shows various detection positions of different positions of a light spot on the scene divided horizontally in three parts (i.e. field folding in the horizontal direction), wherein the detection positions are represented on an optical sensor according to the invention, having reduced horizontal dimensions compared to the comparative optical sensor.

Fig. 3 (a", b", c", d") shows various detection positions of different positions of a light spot on the scene divided horizontally in three parts and vertically in three further parts, thereby forming nine parts (i.e. field folding in both horizontal and vertical directions), wherein the detection positions are represented on an optical sensor according to the invention, having reduced horizontal and vertical dimensions compared to the comparative optical sensor.

For the optical sensors according to the invention, knowledge of the instantaneous projection vector direction of the light beam (5) (also preferably knowledge of the set up of the optic provided between the optical sensor and the scene) are needed to determine whether the detections belongs to the left (11), central (12), or right part (13) of the scene (6). For example, in Fig. 3 (a'), the detection belongs to the upper left corner of the left part (11), while in Fig. 3 (b', c'), the detections belong to the central and lower right corner of the central (12) and right part (13), respectively. Finally, Fig. 3 (d') shows the case in which the light spot is between the first (11) and second parts (12) of the scene (6). For example, scanning firstly the left part (11) of the scene provides a the detection (23) on the optical sensor that belongs to the left part (11) and corresponds to the left half of the object (in this case, the star), while scanning thereafter the second part (12) of the scene provides a detection (24) on the optical sensor that belongs to the central part (12) and corresponds to the right half of the object (in this case, the star).

In the third case, the scene is divided (or folded) in both the horizontal and vertical directions into nine parts along two horizontal folding lines (21) and two vertical folding lines (22). This allows to provide an optical sensor (2) shrink to one-ninth of the size of the comparative optical sensor. Similarly to the second case, by having information about the light beam and the location of the light spot (and preferably the set up of the optics), it is possible to determine on which part of the scene (6) the detection on the optical sensor (2) corresponds to. For example, in Fig. 3 (a"), by knowing the instantaneous projection vector direction of the light beam (5), it can be determined that the detection belongs to the upper left corner of the upper left part of the scene (6). This is similarly done in Fig. 3 (b", c"). Finally, Fig. 3 (d") shows the case in which the light spot is in the middle between four parts of the scene (6). For example, while scanning the part (26) of the scene, the detection (25) corresponds to the lower left quarter of the object (in this case the star), and while scanning the part (28) of the scene, the detection (27) corresponds to the lower right quarter of the object (in this case the star).

Fig. 4 is similar to Fig. 3, with a more realistic case, where each two adjacent fields of view overlap in an overlapping region (29). In the first case, the scene (6) is not divided (or folded), and therefore the detections are as shown in Fig. 4 (a, b, c), similarly to Fig. 3 (a, b, c). In the second case, the scene (6) is divided (or folded) into three parts (11, 12, 13), in which the detections are as shown in Fig. 4 (a', b', c'). As shown, due to overlapping, objects in the overlap region (29) appear twice i.e. appear once during each scanning of part (11) and (12) for the case of the star. In other words, the object is seen twice. For example, each of the detections (30) belongs to both the left part (11) and central part (12) of the scene (6), and corresponds to the complete object (in this case the star). In the third case, the scene (6) is divided (or folded) into nine parts, in which the detections are as shown in Fig. 4 (a", b", c"). Similarly, due to overlapping, objects in the overlapping region appear more than once, in this case multiple times. For example, each of the detections (31) are obtained by scanning of the parts (32, 33, 34, 35) of the scene (6), and corresponds to the complete object (in this case the star). This does not cause a problem as the scanning trajectory of the light source is known.

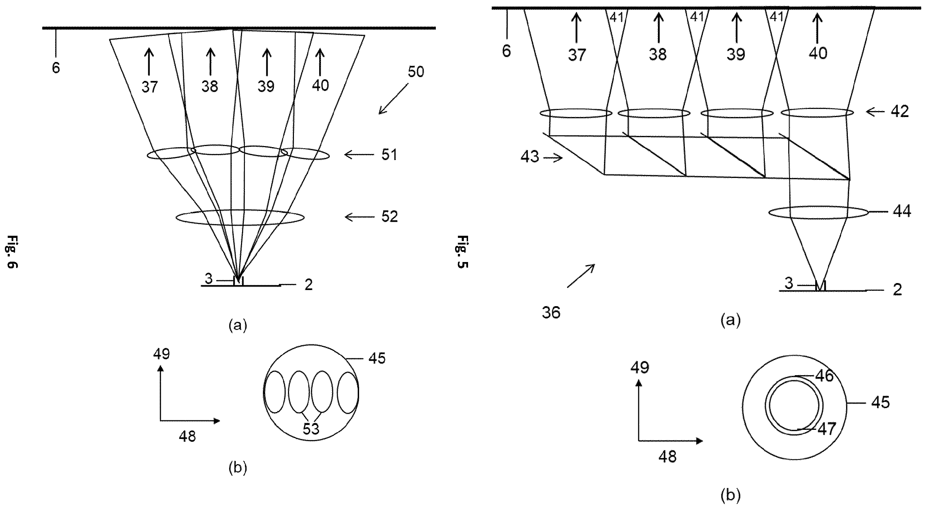

Fig. 5 (a) shows an embodiment of an optical sensing system (36) according to the invention comprising a set of optics comprising a plurality of lenses (42) associated with polarizing beam splitters (43) and a last lens (44) imaging each part (37, 38, 39, 40) of the scene (6). In this case, the scene (6) is in four parts (37, 38, 39, 40), with overlapping regions (41). Each part is imaged by a first lens (42) focusing an image of the part on a polarizing beam splitter (43) which reflects the image through one or more polarizing beam splitter and/or transmit the said image through a last lens (44) imaging each part of the scene onto the optical sensor (2).

Fig. 5 (b) shows the pixel acceptance angle space (45), showing that the fields (46, 47) are all overlayed on one pixel, wherein the X axis (48) is the X angle, and the Y axis (49) is the Y angle. The fields (46, 47) are shown in different sizes for the purpose of illustrating said overlay.

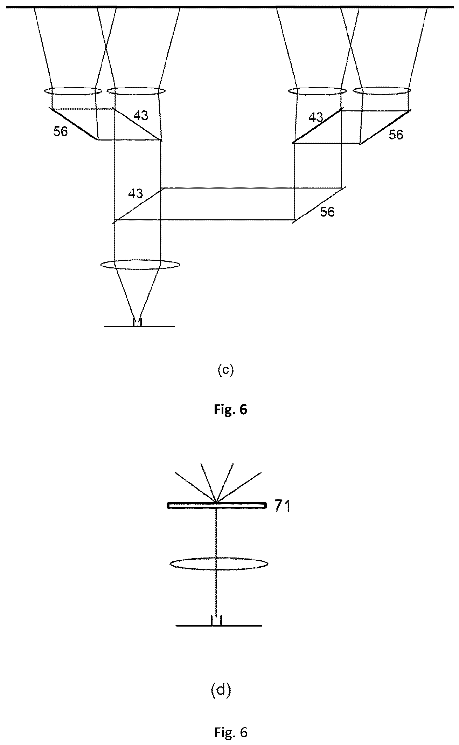

Fig. 6 (a) shows another embodiment of the system (50), also referred to as pupil folding. Similarly to Fig. 5 (a), the scene (6) is in four parts (37, 38, 39, 40). However, unlike in Fig. 5 (a) where the fields are being made to overlay using the set of beam splitters (43), the parts here are separately imaged on the optical sensor (2) using a set of optics (51, 52) comprising a set of first lenses (51) and a second lens (52), wherein the each of the first lenses are associated to a particular part of the scene, and image all together each parts of the scene (6), on the second lens (52) which images all parts of the scene onto the optical sensor (2). Fig. 6 (b) shows the pixel acceptance angle space (45), showing that the fields (53) fall on the same pixel, but they have different angles, for example when a point is imaged on one pixel. For example, the image of a point in the middle of all of the parts would fall on the pixel (3). The configuration in Fig. 6 is more favorable than Fig. 5, since the one in Fig. 6 has no beam splitters, which typically introduce power loss.

Fig. 6 (c) improves further the on Fig. 5 in which the received light at the sensor has very different power levels due to encountering different number of beam splitters, hence the input at the sensor is not balanced. The configuration in Fig. 6(c) allows the light to encounter the same number of beam splitters and therefore have similar power levels at the sensor.

Fig. 6 (d) improves further on Fig. 6 (c), in which the beam splitter configuration is replaced by a diffractive element (71), which is designed such that the inputs thereto are all directed towards the lens and thereafter the sensor. For example, the diffractive element has one main order. This configuration makes the system simpler and more power efficient. Other configurations may be envisaged.

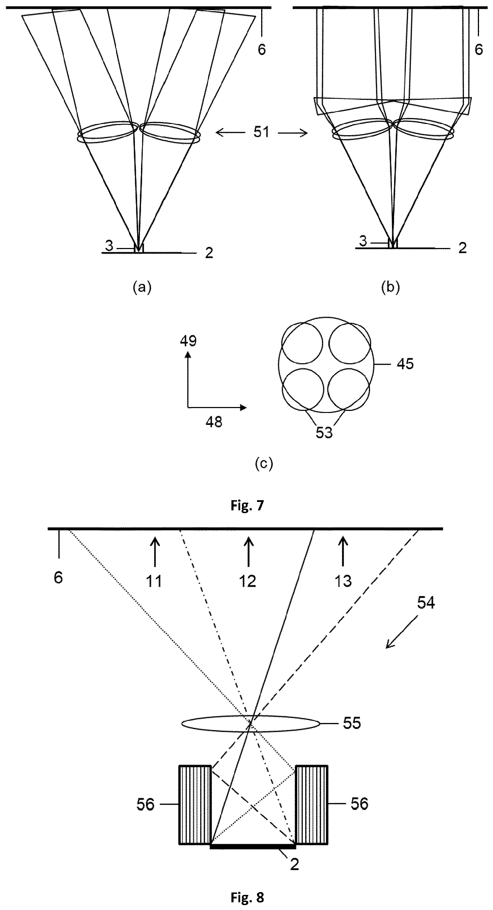

Fig. 7 shows another embodiment of the system (50), similarly to Fig. 6. The difference is that the optics (51) are arranged such that the fields are falling in a different configuration on the optical sensor, for example if four points in the scene corresponding to different parts are imaged on one pixel, this results in the image of said points falling on the pixel as shown in Fig. 7 (c). Fig. 7 (a) and Fig. 7 (b) show different views of the system. The configuration in Fig. 7 is more favorable than in Fig. 5 and 6, as it is more power efficient, due to maximizing the images falling on one pixel. However, this must be done cautiously, since this leads to needing smaller lenses, which integrate less light.

Fig. 8 shows another embodiment of the system (54), which uses optics (55) and a pair of mirrors (56). This shrinks the needed size of the optical sensor (2). Similarly, by having knowledge of the light beam location, it is possible to interpret the detections on the optical sensor (2) and what objects in the scene (5) they correspond to.

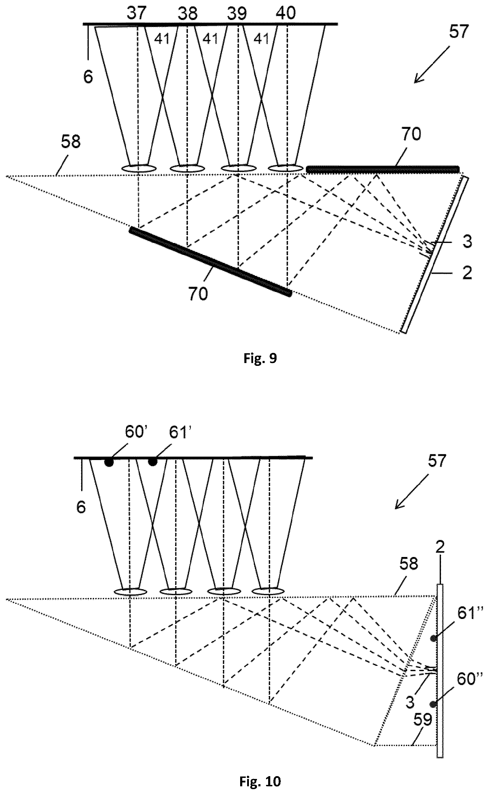

Fig. 9 shows another embodiment of the system (57), which uses another kind of optics (58), sometimes referred to as a wedge, therefore imaging different parts (37, 38, 39, 40) of the scene (6) on said optical sensor (2). A mirror coating may be arranged in different regions in the wedge, for example in region (70), to facilitate the reflection and eventual arrival of the light to the pixel.

Fig. 10 shows a further improvement by arranging the optical sensor (2) to have a right angle with the scene (6), by adding one more optics (59). Prism-like optics may also be used. Such a structure in Fig. 9 or 10 is advantageous as it can be built in one piece, wherein said piece is small and compact.

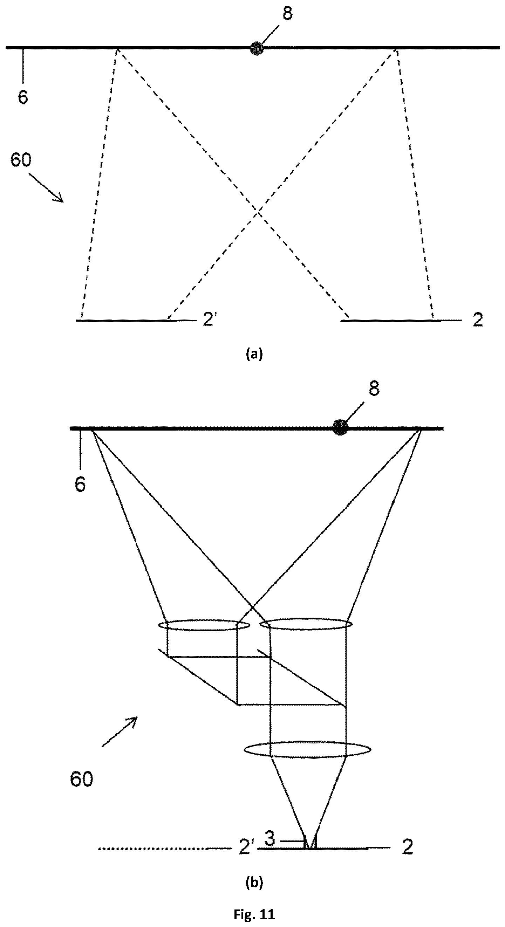

Fig. 11 (b) shows another embodiment of the system (60) in which one optical sensor (2) is used. In comparative systems, as shown in Fig. 11 (a), two optical sensors are needed: a first optical sensor (2) and a second optical sensor (2'), to be able to find the depth of objects in the scene by triangulation, wherein these two sensors have to be synchronized with each other (e.g. the detections have to be synchronized). In the system according to the invention represented in Fig. 11 (b), the second optical sensor (2') can be eliminated (therefore it is marked with a dotted line in Fig. 11 (b)), therefore avoiding synchronization and issues thereof. In this case, the two fields that are captured are overlayed on each other. Using the detection points of the sensor, and since there are two overlayed fields, it is possible to find the depth by triangulation using only one sensor. Fig. 11 (b) shows a specific implementation using beam splitters, but other implementations may be envisaged. This relates to the fourth aspect of the invention as described earlier.

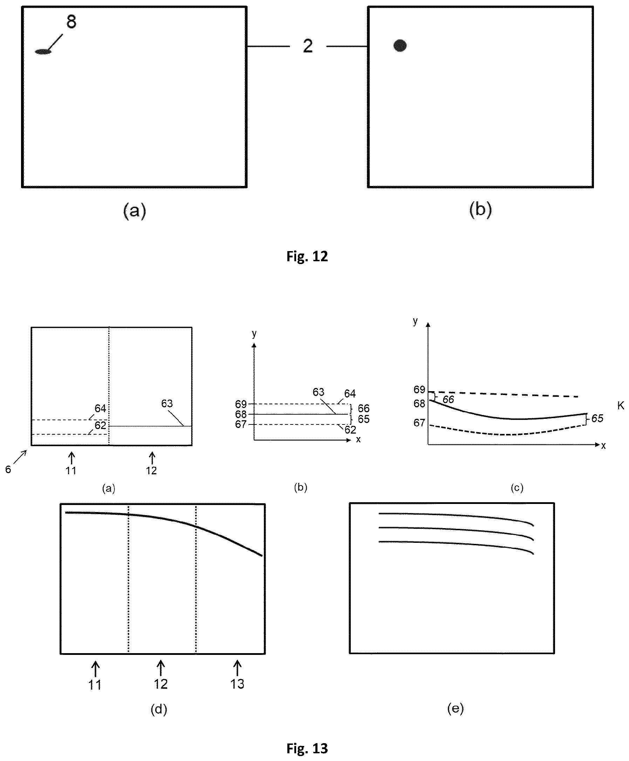

Fig. 12 (a) shows the scene, as seen from the sensor (2) side, being elongated or squeezed in one direction, for example a point-shaped light spot (8) projected at the scene is seen as elongated) at the sensor (2) side. This comes as a result of folding the scene, since for example the width or length of one part of the scene corresponds to the full width of the sensor, depending on the folding factor. To overcome this, the projected light spot is designed so as to compensate for this effect, for example the projector is chosen to have a pattern elongated in the other direction, so as to arrive at the symmetrical point-shaped light spot Fig. 12 (b). In practice, this allows capture the scene in a symmetrical manner. This can be achieved, for example, by using an edge emitter as a projector, or by using anomorphic projection.

Fig. 13 shows in (a) two different parts (11, 12) of the scene (6) being scanned by several scanning lines (62-64). Fig. 13 shows in (b) the lines after being folded in the image plane. It is possible to determine which line belongs to which part of the scene, based on the location (67, 68, 69) of each line (62-64) and the spacing in between (65, 66). For example, line (62) corresponds to part (11) of the scene (6) since it is on location (67) in the y-intercept of the image plane, while line (63) corresponds to part (12) of the scene (6) since it is on location (68). Also, since line (63) is spaced by a spacing of (66) from line (62), then it is possible to conclude that they belong to different parts (11, 12) of the scene (6). Fig. 13 shows in (c) a more realistic case, in which the scan is in a Lissajous pattern.

A preferred embodiment is to arrange the projection of the distortion of the lens on the sensor, such that the folded images at the sensor side do not overlap, as shown in Fig. 13 (d). This is advantageous in distinguishing between the different parts of the scene when folding, as shown in Fig. 13 (e). This can be done, for example, by rotating the lens or the sensor.

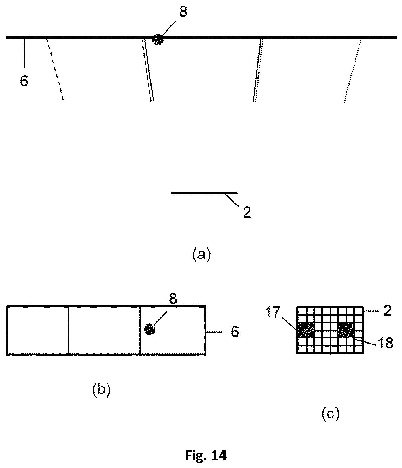

Fig. 14 shows in (a) a top view of a scene (6) in three parts, with a light spot (8) illuminated thereon. Fig. Shows (b) a front view of the same. By imaging the different parts using some optics (thus having multiple partial fields of view), and imaging the full scene having some other optics (thus having a global field of view), it is possible to know with greater accuracy at which point in the scene the light spot is falling. It can also be an alternative way of knowing at which point in the scene the light is falling, instead of knowing this from the instantaneous projection vector direction of the light beam. For example, the detection (17) results from imaging the right part of the scene (6), while the detection (18) results from imaging the full scene. As can be understood, the images will move with different speed, as explained earlier. It is also understood that the focal lengths of the optics is designed accordingly.

It is to be understood that the scene is illustrated as flat surface for simplicity, however the scene in real life is a 3D scene e.g. with objects therein having different depths.

It is to be understood that the optics used in any of the above figures e.g. the lenses, may be replaced by other suitable optics to perform the same purpose.

Other arrangements for accomplishing the objectives of the methods and devices embodying the invention will be obvious for those skilled in the art. The proceeding description gives details of certain embodiments of the present invention. It will, however, be clear that no matter how detailed the above turns out to be in text, the invention may be applied in many ways. It should be noted that the use of certain terminology when describing certain characteristics or aspects of the invention should not be interpreted as implying that the terminology herein is defined again to be restricted to specific characteristics or aspects of the invention to which this terminology is coupled.

In a fifth aspect, the present invention relates to a method for optical sensing. The method comprises the step of projecting a light beam onto a scene, by means of a projector. The light beam creates a light spot on the scene having a predetermined spot size, said spot may for example be dot-shaped or a semi-dot or disk-shaped or a collection of dots or any other suitable shape. Knowing the shape of the light spot is advantageous for filtering purposes (e.g. neighborhood and persistence filtering) as discussed below. The method comprises the step of scanning said light beam on said scene along a trajectory, by means of a scanner. Scanning may be for example in a Lissajous pattern or a raster scan, or the like, for example a repetitive projection pattern. The scanning means may for example be a MEMS scanner or a mirror, or an optical phase array, or meta surface approach beam scanning, or the like. For example, scanning between two extreme vertical lines (e.g. one on the extreme right, and one on the extreme left) defining the scene in the horizontal direction, and two extreme horizontal lines (e.g. one on the extreme top, and one on the extreme bottom) defining the scene in the vertical direction.

The light beam may be continuous or pulsed, and the present invention can work with either. It is however preferrable to use a pulsed light beam (e.g. a pulsed laser) since the power is concentrated in the pulse i.e. each pulse has a higher power while maintaining the same average power, thereby allowing easier detection and filtering. Also, using a pulsed light beam is advantageous when using persistence or neighborhood conditions (explained below) for better filtering, as it allows to check said conditions based on the pulse length, instead of based on observation windows as in the case of a continuous pulse, which is typically longer than the pulse length.

The method comprises the step of imaging at least two different parts of the scene simultaneously onto sensing units of a first optical sensor. Each sensing unit comprises a photo detector. Said imaging is done such that each sensing unit of said optical sensor correspond to at least two different points or areas on said scene (or any other shape corresponding to a kernel on the sensor), wherein each point or area of said at least two different points or areas corresponds to a different part of said at least two different parts. For example, a first point in the first part corresponds to a first sensing unit, and a second point in the second part corresponds to the same first sensing unit. Imaging is done, for example, by means of the appropriate optics, imaging the reflected light from the scene. For example, the light is reflected, after hitting objects in the scene, imaged by said optics, and finally received by the first optical sensor e.g. by the corresponding sensing unit to the point on the scene. In other words, such optics ensure the reflected light reaches the corresponding sensing unit. The method comprises the step of determining the location of detection on said optical sensor.

Making each sensing unit correspond to two points in the scene is advantageous in allowing to reduce the size of the optical sensor. For example, instead of dimensioning the first optical sensor to receive the reflected light from the complete scene, wherein each sensing unit corresponds to one point in the scene, thereby needing an optical sensor of large size, this method suggests "folding" the scene, such that each sensing units correspond to two or more points in the scene, therefore allowing to reduce the size of the optical sensor. For example, each sensing unit corresponds to two or three or four or more points in the scene, therefore allowing shrinking of the size of the sensor two or three or four or more times.

The method comprises the step of determining the location of the light spot on the scene, among said at least two different points or areas, based on the estimated or measured instantaneous projection vector direction on the light beam on the scene. For example, the light spots may be imaged on the optical sensor and sensing units thereof. For example, after detecting the light spot by a sensing unit, it is needed to identify whether the light spot was present on the first part or the second part, since there are two points, one in each part, that correspond to the same sensing unit. In other words, this allows to identify whether the detection by the sensing unit corresponds to the point in e.g. the first part, or the second part. This is done using information of the light source and scanner, namely the instantaneous projection vector direction, either measured or estimated.

For example, the instantaneous projection vector direction of said light beam can be obtained (e.g. measured) from the projector, and therefore it is possible to know where the light spot is falling in the scene, and therefore which part of the scene the light spot belongs to.

Alternatively, the instantaneous projection vector direction can be estimated. For example, since the scanning trajectory is continuous, and knowing the size of each part of the scene, it is possible to know at each point which part the detection belongs to. This can also be done by knowing the trajectory of the light, and knowing how the scanned beams change their scanning direction e.g. on the edges of the scene, as explained below and in the figures.

For example, let us assume there are two parts: a first part and a second part, ordered from the left to the right, and the light beam is scanning from the middle of the second part, towards the left direction. In this case, it is known that after reaching the left edge of the second part, the light beam will transition to the right edge of the first part, therefore the detection would jump from the sensing unit at the extreme left (corresponding to the extreme left edge of the second part), to the sensing unit at the extreme right (corresponding to the extreme right edge of the first part). Thereafter, when the scanning reaches the extreme left of the first part, and subject to the scanning fashion and trajectory, the scanning speed slows down and reverses the scanning direction back towards the right side. Since it is known that the left edge of the first part is the left edge of the scene, it can be concluded that the part on which the light beam is illuminating would remain the first part. For example, the method comprises the step of identifying the part of the scene on which the light beam is scanned, based on the trajectory of the scanning beam. This is particularly important in case of overlapping field of views of the first and second parts, as shown in figures 4-5.

It is also important to know how the movement of the light beam in the scene maps on the sensing units e.g. a certain movement of the light beam in the scene results in a certain movement of the detection on the optical sensor, therefore allowing to know at each time step which part of the scene the detection corresponds to.

In other words, the light beam has a projection vector, wherein said vector has a direction at each time instance. By knowing the projection vector direction of the light beam from the scanner to the scene, it is possible to determine which part the detections correspond to.

This method allows reducing the power consumption and therefore obtain a power efficient system, since the same scene is perceived with a smaller optical sensor. As a result of reducing the size of the optical sensor, less filtering is needed (and lower power is needed for said filtering, and lower latency due to requiring less processing), therefore allowing to obtain a more noise resistant system. This method also reduces the number of stand-by sensing units which would otherwise consume power.

The method also allows obtaining a high angular resolution per pixel, since each sensing unit corresponds to more than one point of the scene. For example, such an optical sensor is capable of detecting very small objects and e.g. sharp edges and complex shapes.

Preferably, the method comprises the step of imaging said at least two parts, by means of one optics, onto said optical sensor. For example, using a prism-like optics, or mirrors, or a combination thereof, or other optics able to guide images of both parts of the scene to the same optical sensor, as illustrated in the figures below. Alternatively, the method comprises imaging each of said at least two parts, by means of one corresponding optics to said part, onto said optical sensor. For example, each part has a corresponding optics, wherein said corresponding optics images said corresponding part, on the optical sensor. For example, a first optics corresponds to a first part image said first part on the optical sensor, and a second optics corresponds to a second part image said second part on the optical sensor, wherein the images are overlayed.

Another example is that each of the optics of the different parts image said parts on one optics, which images the two parts on the optical sensor. For example, a first optics corresponds to a first part image said first part on a third optics, and a second optics corresponds to a second part image said second part on the third optics, wherein the images are overlaying.

Although the images are overlayed on each other, it is known where the light beam is illuminating in the scene, hence it is known to which part each point corresponds to. Furthermore, the light spot is distinguishable from the noise for example by means of neighborhood of persistence filtering), .

Another way of looking at it is that the scene is angularly split. For example, if the scene is split into two parts, and assuming 70 degrees field of view, then each part has a 35 degrees angle field of view.

Preferably, the method comprises the step of synchronizing said projector with said optical sensor. For example, information from the projector on the instantaneous position of the light beam is continuously being sent to the sensor. This allows the optical sensor to know easily and in real-time the instantaneous position of the light beam on the scene and therefore to know which part of the scene the detection corresponds to. For example, a feedback loop is provided from said projector to said optical sensor. However, this is not always necessary, as will be explained below.

Preferably, the method comprises the step of predefining the trajectory along which the light beam is scanned. For example, knowing where the light beam will be scanning at each time step.

Preferably, scanning said light beam starts from a predetermined region on said scene. For example, predefining the instantaneous position of the light beam on the scene at each time step along the trajectory, and therefore knowing in advance where the light beam will be at each time step. This provides a possible starting point of operation for the optical sensor and the projector i.e. allows indirect synchronization between the optical sensor and the projector i.e. synchronization without having a link between the optical sensor and the projector. Said predetermined region is preferably a point substantially in the middle of the scene or what is referred to as zero-crossing, which point is easy to refer to. In other words, by knowing the time step at which the scanning starts, and its instantaneous position, and the overall trajectory, it is possible to indirectly synchronize the projector to the optical sensor, without having a direct synchronization link between the optical sensor and projector. However, in some cases, a direct synchronization link may still be needed, for example to compensate for frequency mismatch. As a result, it is possible to know which sensing units to activate or deactivate at each time step. Alternatively, the projector provides a signal which is fed to the optical sensor, which signal allows the optical sensor to know when the operation will start, after which the predefined trajectory is known to the optical sensor.

A further way of determining the part to which the detection relate, is by knowing at which points a certain scanning trajectory would cross, it is possible to determine the part to which the detection relates. In other words, by knowing the scanning pattern, it is possible to distinguish whether the detection is e.g. on the first or second part.

Alternatively to predefining the trajectory, the method preferably comprises the step of analyzing the trajectory and predicting based thereon the instantaneous position at each time step, and based thereon determine which part of the scene the detection corresponds to. For example, in case the trajectory repeats itself after a certain time span or in case the trajectory is predictable. The advantage is that synchronization between the optical sensor and the projector is no longer needed. For example, the zero-crossing may provide information on the frequency and phase of the light beam.

Preferably, the method comprises the step of arranging said at least two different parts in a sequential manner along one direction. For example, one part is at one end of the scene, and another part is at the other end of the scene, and the rest of the parts (if any) are arranged in between. For example, one end of the sensor corresponds to the part at one end of the scene, and another end of the sensor corresponds to the part at the other end of the scene. For example, the parts are arranged next to each other in a vertical direction, or in a horizontal direction. In this case, for example, each sensing unit corresponds to one point of each of said parts, for example, the top-left sensing unit in the optical sensor corresponds to the top-left point of the first part of the scene, and the top-left point of the second part of the scene, and the top-left point of the third part of the scene. This arrangement allows perceiving the complete scene.

Alternatively, the method comprises the step of arranging said at least different parts in a sequential manner along two directions. For example, the parts are arranged in a matrix-like arrangement. For example, a number of parts of the scene are arranged sequentially in the vertical direction, and each of said parts of the scene are also arranged sequentially in a horizontal direction, so as to create a matrix-like of parts of the scene. In this case, for example, each sensing unit corresponds to one point of each of said parts. For example, in case of a scene having nine parts, the bottom-right sensing unit corresponds to the bottom right point of each of the parts of the scene. This arrangement allows further shrinking of the optical sensor.

Preferably, the method comprises the step of configuring said optical sensor in a plurality of rows and columns of said sensing units. This allows filtering based on neighborhood detections e.g. to exclude single isolated detections caused by noise. This also provides some error tolerance in case the photons were not detected by the predicted sensing units, but by sensing units which are neighboring thereto. For example, the number of rows and columns may be chosen as suitable to compensate for errors and to make sure of receiving the light by the optical sensor. For example, the light spot (generated by the light beam) has a spot size, wherein the number of rows is chosen such that the spot size is completely detected by said optical sensor.

Preferably, the method comprises the step of filtering the detection determined by one sensing unit, based on the presence of a detection over at least one neighboring sensing unit to said one sensing unit at one time step, or based on the presence of said detection over at least two consecutive time steps. This allows reliable detection. For example, a noise signal would neither, in most cases, appear over many neighboring pixels, nor appear on the same pixel over multiple consecutive time steps. Filtering is particularly advantageous for this invention as it makes it easier to distinguish the active light from the noise, and therefore makes it easier to determine which part of the scene the illumination corresponds to.

Preferably, the method comprises the step of triangulating detection points of said first optical sensor with instantaneous position of said light beam or with detection points of a second optical sensor. This allows obtaining the depth of objects in the scene. Since the detection relies on the instantaneous position of the light beam e.g. of the instantaneous position of the emitted light of the projector, the need for stereo-matching is eliminated, for example between the light source and the first optical sensor, or between the first optical sensor and a second optical sensor. For example, the image in the first optical sensor can be matched to the image in the second optical sensor, for example using said light spot as a reference, without need for stereo-matching.

Preferably, the method comprises the step of constructing the scene progressively i.e. as the scene is scanned, based on 3D points obtained from said triangulation. In other words, one 3D point is obtained at each time step, such that the scene and information thereof is progressively obtained. This allows low latency operation and real-time knowledge of objects in the scene. This is also particularly advantageous in allowing to know which part of the scene the light spot corresponds to, which would be impossible using a camera of the prior art which accumulates the light over a long period.

Preferably, each of the scanned light beams in a part of the scene are spaced by a predetermined spacing with respect to scanned light beams in another part of the scene, such that said light beams do not overlap when overlaying the parts of the scene on one another. This is advantageous in identifying, with greater precision, which scanning beam belongs to which part of the scene. For example, when scanning straight lines, each fold is scanned at a different y value i.e. the scanning light has a different y value at each fold, such that the lines do not overlap with overlaying the folds on each other. Scanning a Lissajous pattern would be more complex, but the concept remains the same. To achieve this, optics and lenses are designed for this purpose, such that each fold receives the light with a shift e.g. in the y direction. For example, designing the appropriate lenses or optics which have a certain distortion to achieve this.

Preferably, the method further comprises the step of imaging more than one part, for example multiple parts or most or all the parts of said scene, onto sensing units of a first optical sensor. This is advantageous in knowing at which point in the scene the light spot is falling, hence identifying the part of the scene being illuminated. For example, some optics have a global field of view, while other optics have a partial field of view i.e. being directed to one part of the scene. As a result, the image of the beam as seen by the optical sensor, when the optics have a partial field of view would move faster than the image of the beam as seen by the optical sensor, when the optics have a global field of view, hence it is possible to differentiate between the two beams. There may be need for optics with different configurations and properties in this case e.g. lenses with different focal lengths. For example, a shorter focal length would allow having a larger field of view.

Preferably, each light beam has a unique temporal stamp, for example a unique duty cycle or a temporal width or other properties of the light beam, such that it is possible to distinguish from different light beams, for example in case the system has more than one light beam, or in case other light beams from other systems are present in the scene. This way it is possible to know the genuine location or index of the light beam on the scene with great accuracy, especially in presence of multiple light beams.

Preferably, the method comprises the step of projecting a light beam of high power at the far field, and a light beam of lower power at the near field. For example, by means of two light sources, one source illuminates the near field, and the other source illuminates the far field. Alternatively, by means of one light source and a beam splitter, for example splitting the power such that the far field is illuminated by a beam of high power, and the near field is illuminated by a beam of low power.

Having two light sources is advantageous in case the interest is only in one of the two: near field or far field. For example, if the interest is in the near field only, then it is not needed to illuminate the far field, hence reducing the power consumption.

Having two light sources directed differently (i.e. at near and far fields), allows getting an overlap between the light beam and the field of view of the optical sensor at both near field and far field. Otherwise, if only one light source is directed at the far field, then there would not be an overlap between the light beam and the field of view at the near field, hence not allowing to perceive the scene at shorter distances.

Having two light sources directed differently (i.e. at near and far fields), also allows to reduce the circle of confusion for the near field and for the far field, hence focusing the light properly depending on the distance.

In a sixth aspect, the present invention relates to a system for optical sensing. The system comprises at least a first optical sensor, wherein said optical sensor comprises a plurality of sensing units, and each sensing unit comprises a photo detector.

The system comprises a projector adapted to project a light beam on a scene. The projector is, for example, a light source. The light source is adapted to generate a light beam which generates a light spot on said scene (i.e. on the field of view of the optical sensor).

The system comprises scanning means adapted to scan the light beam on said scene along a trajectory. Said trajectory comprises a plurality of points on said scene, wherein at each time step, one point is scanned. It is preferable to scan as many points as possible, since this implies more information is obtained in relation to the scene and the depth of each point. However, the time-speed tradeoff is to be understood, for example having more points would result in slower scanning. Scanning is preferably continuous, such that objects in the first field of view are continuously scanned and identified. For example, a light source generates a light beam, which produces a light spot on an object, wherein said beam is continuously scanned on said scene along said trajectory.

The system comprises optics adapted to image at least two different parts of said scene simultaneously onto said optical sensor i.e. the optics is able to make an image of said at least two parts of said scene on sensing units of said first optical sensor. Based on the location of the light beam imaged on said first optical sensor, the depth information of the scene can be calculated by triangulation, as described in different parts of the document.

Imaging said scene by means of said optics is done such that each sensing unit of said optical sensor corresponds to at least two different points on said scene. Each of said points corresponds to a different part. In other words, each sensing unit detects light from more than one point of the scene, wherein each point corresponds to a different part.

The system is adapted to determine the location of the light spot on the scene, among said at least two different points, based on the estimated or measured instantaneous projection vector direction of the light beam on the scene.

For example, the reflected light from the scene (e.g. from an object in the scene) is received by at least one sensing unit, after which the optical pulse is translated into an electrical signal or logic pulse. Each pulse is timestamped with respect to a reference clock.

Scanning the scene allows calculating the depth of each point along the trajectory. However, this invention is not limited to obtaining the depth information of objects in the scene, but is generalized to any system performing optical sensing for different purposes, in which information is obtained from different parts of the scene, and based on the instantaneous position of the light beam, the information is analyzed to understand which detection belongs to which part in the scene. For example, the instantaneous position of the light beam is known (or found) for each time step.

Since the detection is based on the light beam, and since there is a significant difference between an illuminated point and a non-illuminated point due to the concentration of the illumination in a small area (e.g. the beam is a dot-like pattern), the system is immune to ambient light. At the same time, it is known where the beam is shining at each moment, therefore a detection in a spot or area in which the beam is not shining at that moment, is likely a false detection. Similarly, since the detection is based on said beam being e.g. dot-like, the power consumption is minimal.

Preferably, at least some actions may be done by the assistance of a processor.

Preferably, the system comprises one optics adapted to image said at least two parts. Alternatively, the system comprises a plurality of optics, wherein each optic corresponds to one different part of said at least two parts, wherein each optics is adapted to image the corresponding part of said at least two parts.

Preferably, each of said photodetectors is a single photon detector, preferably a single photon avalanche detector SPADs. Alternatively, said photo detector is an avalanche photo detector. Single photon detectors are advantageous since they are fast by nature, such that the position of the light beam (and the spot it leaves on the scene) is detected in a fast manner and accurate manner. Single photon detectors also minimize the energy needed to be able to detect said beam. In other prior art systems where single photon detectors are not used, the detection is slow such that for example the beam on the field of view appears as a line instead of individual light spots, in which case stereo matching would be needed. However, using single photon detectors to detect a light spot (e.g. a dot) that is being scanned, eliminates the need for stereo-matching.

Furthermore, using a single photon detector such as SPAD in the pixels (i.e. sensing units) is advantageous because it is sensitive to a single photon, which means that the active projected structure will need a minimum amount of energy since the detector is single photon sensitive. Another advantage is sub-nanosecond response time of detectors such as SPADs, meaning the photon is detected and encoded into a digital signal in nanoseconds.

For example, the detector is adapted to output a logic signal e.g. an electrical detection signal upon detection of a photon. For example, a detection signal may be represented by a signal comprising logic '1' e.g. a detection, while no detection signal may be represented by a signal comprising logic '0' e.g. no detection. Alternatively, a detection signal may be represented by or result in a pulse signal, e.g. a transition from logic '0' to logic '1', then a transition back from logic '1' to logic '0', while no detection may be represented by (or result in) an absence of such a pulse signal. Preferably, each photo detector is arranged in a reverse biased configuration.

Preferably, the system comprises at least a second optical sensor, for example constructed similarly to the first optical sensor. Preferably, the system is adapted to triangulate detection points of said first optical sensor with, in a first case, projection position of said projector, or, in a second case, with detection points of said second optical sensor. This allows to obtain the depth information at each point in the scene. In the first case, it is known where the light source is shining at each moment. Therefore, triangulation may be based on the detection points of said first optical sensor, and the location from where the light source is originating, similarly to the case in which a second optical sensor is used to achieve said triangulation. For example, considering the light source as a camera or an optical sensor, for which the image plane would then contain the dots forming the scanning pattern, instead of seeing or detecting the light spot with the sensing units. For example, the instantaneous position and orientation of the light beam projected by said projector is triangulated with the detection of one optical sensor. In the second case, the detection points of the first and the second optical sensors are triangulated.

Scanning a light beam from said projector or light source is advantageous in allowing triangulation. For example, using a system comprising a light source emitting a light beam on a scene (e.g. an environment) and two of said optical sensors, wherein said two sensors have a shared field of view of the scene, it is possible to convert x-y-time data of the two sensors to x-y-z-time data by triangulation, for each time stamp. For example, by adapting said light source to illuminate a light beam on said scene in an illumination trace, wherein said light source comprises means adapted to scan said light beam on said scene (preferably continuously), wherein said optical sensors monitor the light spot produced by said light beam and output locations of points of at least one object (e.g. points of surfaces of said object) in said scene along said trace at a plurality of instances, wherein the x-y-time data of the two optical sensors can be converted to x-y-z-time data using triangulation. The light source may act for example as a reference point, such that said locations of said points of said object of the first optical sensor can be triangulated with those of the second optical sensor, to create the depth or z-dimension.

Preferably, finding depth information may be preceded by a filtering step, for example to reduce the number of sensing units with false detections. Filtering may be based on expected pulse width, expected dot projection size, past detection(s) and current detection(s) of the pixel and its neighboring pixel(s). For example, checking the detection of the neighboring sensing units (e.g. pixels), or checking the persistence of the detections over time. This is an in-pixel filtering mechanism. Another filtering mechanisms may be also available, for example after projecting the detections on a periphery of the optical sensor, it is possible to remove some noisy detections, since the projection pattern is known.

Preferably, the optical sensor is configured in a plurality of rows and columns of said sensing units. This is advantageous in allowing the detected signal to be filtered, for example using temporal and neighborhood information, for example as described in PCT IB2021 054688, PCT EP2021 087594, PCT IB 2022 000323, and PCT IB2022 058609. For example, checking the detection of the neighboring sensing units, since the detections are likely to be detected over more than one pixel, as described in PCT EP2021 087594. Alternatively or additionally, checking the persistence of the detections over time as described in PCT IB2022 058609. Therefore, the detections which are persistent over a long period of time are likely true detections, and the detections otherwise are likely false detections. Other filtering mechanisms may be envisaged, as described in PCT IB2021 054688, PCT EP2021 087594, PCT IB2022 000323, and PCT IB2022 058609.

Preferably, the parts are arranged in a sequential manner along one direction, or along two directions. This is advantageous to perceive the complete scene, as described in the method.

Preferably, the light source is adapted to be in a wavelength detectable by the sensing units of the optical sensor. For example, between 100 nanometer and 10 micrometer, preferably between 100 nanometer and 1 micrometer. For example, each optical sensor comprises photo detectors able to detect photons impinging on each detector within a wavelength detection window falling within the range of 100 nanometer and 10 micrometer, preferably between 100 nanometer and 1 micrometer. It is also possible to use multiple wavelengths to reduce sensitivity to surface and color, and then have a filter on chip.

Preferably, the system comprises image representation means, for example a screen-like or other image representation devices, so as to reproduce locations of points of said objects in said scene.

Preferably, the optical system is used for 3D vision applications, for example AR/VR applications. For example, the system may be used to visualize objects in three dimensions. Alternatively, said sensor may allow analyzing the scene, for example by extracting features of objects in the scene, without necessarily producing an image of said scene. Preferably, the system comprises a plurality of optical sensors and/or a plurality of light sources. This is advantageous in creating 3D vision. For example, by triangulating the outputs (i.e. the x-y data) of two such optical sensors to obtain 3D information (x-y-z data).

Preferably, the projector is designed such that it has a known beam divergence. This is advantageous in comparison to a system in which the beam is collimated, because the point spread function is constant for all distances. For example, in a system with a collimated beam, the sensor would see a big spot at short distances, and a small spot at long distances, therefore the number of pixels which receive the reflected light is different in both cases i.e. the kernel has a different size. However, in our system, the beam is designed to have a beam divergence, such that at both short and long distances, the number of pixels which receive the reflected light would be the same i.e. the kernel is the same size. This is advantageous in keeping the signal to noise ratio at a certain acceptable level, which is advantageous for distinguishing noise from the real signal.

Any feature of the fifth aspect may be as correspondingly described in the sixth aspect. For example, the system of the second aspect is operating based on the method of the first aspect. Aspects of the fifth and sixth aspects may also correspond with aspects of the first, second, third, and fourth aspects.

In a seventh aspect, the present invention relates to a wearable device (e.g. headset) comprising the optical sensing system as described herein. In one embodiment, the headset can be a wearable device that can be mounted on the head of a user, such as an AR/VR/XR glasses. In one embodiment, the optical sensing system may comprise an optical sensor which is mounted on one side of the glasses (or headset, or wearable), and a laser source which is mounted on another side of the glasses.

Embodiments of the fifth and sixth aspects can be set out as in the following list of sentences:
1. A method for optical sensing, the method comprising the steps of:
   - projecting a light beam (5) onto a scene (6), thereby creating a light spot (8, 9, 10) on said scene (6);
   - scanning said light beam (5) on said scene (6) along a trajectory;
   - imaging at least two different parts (11, 12, 13) of said scene (6) simultaneously onto sensing units (3) of a first optical sensor (2), such that each sensing unit (3) of said optical sensor (2) corresponds to at least two different points or areas (8, 8', 8") on said scene (6), wherein each point or area (8, 8', 8") of said at least two different points or areas (8, 8', 8") corresponds to a different part (11, 12, 13) of said at least two different parts (11, 12, 13); and
   - determining the location of the light spot (8, 9, 10) on the scene (6), among said at least two different points or areas (8, 8', 8"), based on the estimated or measured instantaneous projection vector direction of the light beam (5) on the scene (6).
2. A method according to sentence 1, wherein the method comprises the step of imaging said at least two parts (11, 12, 13), by means of one optics, onto said optical sensor (2), or
   wherein the method comprises the step of imaging each of said at least two parts (11, 12, 13), by means of one corresponding optics to said part (11, 12, 13), onto said optical sensor (2).
3. A method according to any of the previous sentences, wherein the method comprises the step of synchronizing said projector (3) with said optical sensor (2).
4. A method according to any of the previous sentences, wherein the method comprises the step of predefining the trajectory, preferably wherein scanning said light beam (5) starts from a predetermined region on said scene (6).
5. A method according to any of the previous sentences, wherein the method comprises the step of arranging said at least two different parts (11, 12, 13) in a sequential manner along one direction, or along two directions.
6. A method according to any of the previous sentences, wherein the method further comprises the step of configuring said optical sensor (2) in a plurality of rows and columns of said sensing units (3).
7. A method according to any of previous sentences, wherein the method comprises the step of filtering the detection determined by one sensing unit (3), based on the presence of a detection over at least one neighboring sensing unit to said one sensing unit at one time step, or based on the presence of said detection over at least two consecutive time steps.
8. A method according to any of the previous sentences, wherein the method comprises the step of triangulating detection points of said first optical sensor (2) with instantaneous position of said light beam (5) or with detection points of a second optical sensor (2').
9. A method according to sentence 8, wherein the method comprises the step of constructing the scene (6) progressively as the scene (6) is scanned, based on 3D points obtained from said triangulation.
10. A method according to any of the previous sentences, wherein each of the scanned light beams (62, 64) in a part (11) of the scene (6) is spaced by a predetermined spacing (65, 66) with respect to the scanned light beams (63) in another part (12) of the scene (6), such that said light beams (62, 63, 64) do not overlap when overlaying the parts (11, 12) of the scene (6) on one another.
11. An optical sensing system (1) for optical sensing, comprising:
   - at least a first optical sensor (2), wherein said optical sensor (2) comprises a plurality of sensing units (3), and each sensing unit (3) comprises a photo detector,
   - a projector (3) adapted to project a light beam (5) on a scene (6), thereby creating a light spot (8, 9, 10) on said scene (6),
   - scanning means adapted to scan the light beam (5) on said scene (6) along a trajectory, and
   - optics adapted to image at least two different parts (11, 12, 13) of said scene (6) simultaneously onto said optical sensor (2), such that each sensing unit (3) of said optical sensor (2) corresponds to at least two different points or areas (8, 8', 8") on said scene (6), wherein each point or area (8, 8', 8") of said at least two different points or areas (8, 8', 8") corresponds to a different part (11, 12, 13) of said at least two different parts (11, 12, 13),
   wherein said system (1) is adapted to determine the location of the light spot (8, 9, 10) on the scene (6), among said at least two different points or areas (8, 8', 8"), based on the instantaneous projection vector direction of the light beam (5) on the scene (6).
12. An optical sensing system (1) according to sentence 11, wherein the system (1) comprises one optics adapted to image said at least two parts (11, 12, 13), or
   wherein the system comprises a plurality of optics, wherein each optics corresponds to one different part of said at least two parts (11, 12, 13), wherein each optics is adapted to image the corresponding part of said at least two parts (11, 12, 13).
13. An optical sensing system (1) according to any of sentences 11 or 12, wherein each of said photodetectors is a single photon detector, preferably a single photon avalanche detector SPAD.
14. An optical sensing system (1) according to any of sentences 11 to 13, wherein said parts (11, 12, 13) are arranged in a sequential manner along one direction, or along two directions.
15. A wearable device comprising the system (1) according to any of sentences 11 to 14.

### LIST OF REFERENCE SIGNS

**1, 36, 50, 54, 57, 60** Optical sensing system
**2, 2'** First and second optical sensor
**3** Sensing unit
**4** Light source
**5** Light beam
**6** Scene
**7** Scanner
**8, 9, 10** Location of the light spot
**11, 12, 13** Left, central, and right part of the scene
**14, 15, 16** Left, central, and right part of the optical sensor
**17, 18, 19** First, second, and third detection
**20** Optical sensor having a single part
**21,22** Folding lines
**23, 24, 25, 27** Detections
**26, 28** Parts of the optical sensor
**29, 41** Overlapping regions
**30, 31** Detections
**32, 33, 34, 35** Parts of the optical sensor
**37, 38, 39, 40** Four parts of the scene
**42, 44** Optics
**43** Polarizing beam splitters
**45** Pixel acceptance angle space
**46, 47** Overlayed fields
**48, 49** X and Y angle
**51, 52** Optics
**53** Adjacent fields
**55** Optics**56**Mirrors
**58, 59** Optics
**60', 60", 61', 61"** Points in the scene and image thereof
**62, 63, 64** Scanning lines **65, 66** Spacing between the scanning lines **67, 68, 69** Locations of the scanning lines
**70** Mirror coating **71** Diffractive element **72** Optics

## Claims

1. A method for optical sensing of a scene (6), the scene being defined at least by two orthogonal dimensions X and Y, the method comprising the steps of :
- defining at least two parts (11, 12, 13) of the scene (6) wherein the parts (11, 12, 13) have at least one dimension smaller than a dimension X, Y of the scene (6);
- providing a first optical sensor (2) comprising a plurality of sensing units (3), the first optical sensor being adapted for imaging each of the parts (11, 12, 13) of the scene, said optical sensor (2) having sensing units (3) corresponding to at least two different points or areas (8, 8', 8") of said scene (6), wherein each point or area (8, 8', 8") of said at least two different points or areas (8, 8', 8") corresponds to a different part (11, 12, 13) of said at least two different parts (11, 12, 13) ;
- projecting a light beam (5) on the scene (6) thereby creating a light spot (8, 9, 10) on the scene (6) and scanning the light beam (5) along a path such as to scan at least partially each part (11, 12, 13) of the scene (6);
- imaging and detecting each light spot (8, 9, 10) scanned on each part (11, 12, 13) of the scene (6) onto the optical sensor (2); and
- determining the positions of light spots (8, 9, 10) projected on each part (11, 12, 13) of the scene (6) at any time of scanning on basis of:
∘ a determined position of the projection vector direction of the light beam (5) on the scene (6) at the time of scanning; and/or;
∘ a measurement of light spot (8, 9, 10) positions by a sensing unit (3) of the optical sensor (2) at the time of scanning.

2. A method according to claim 1 further comprising the steps of :
- defining a theoretical size of a theoretical optical sensor adapted for imaging the whole scene ; and ;
- selecting the first optical sensor with a size adapted for imaging one of the at least two parts of the scene, wherein the size of the first optical sensor is smaller than the size of the theoretical sensor.

3. A method according to any one of the preceding claims further comprising the step of providing at least one optic between the scene (6) and the optical sensor (2), wherein the optic is configured to project an image of each of the parts (11, 12, 13) onto the optical sensor (2), and/or wherein a first optic is configured to image a first part onto the first optical sensor, and a second optic is configured to image a second part onto the first optical sensor.

4. A method according to any one of the preceding claims, wherein the scanning path is predefined such that the expected position of the light beam on the scene at any time during scanning is predictable and allows to assess to which part of the scene corresponds an image obtained at the said time of scanning by a sensing unit of the first optical sensor.

5. A method according to any one of the preceding claims wherein the scene (6) is divided in a plurality of parts in a sequential manner along one dimension or along two dimensions and the first optical sensor sized in function of the size of each plurality of parts.

6. A method according to any one of the preceding claims wherein the plurality of sensing units (3) are arranged in a line or in an array of rows and columns.

7. A method according to any one of the preceding claims further comprising filtering the detection/image of a light spot by a sensing unit at any time during scanning, based on consecutive detections of a light spot by one sensing unit and/or based on detections of a light spot by one or more vicinal sensing units.

8. A method according to any one of the preceding claims comprising the step of triangulating detection points of images obtained on said first optical sensor (2) with instantaneous position of said light beam,
or comprising the steps of:
- providing a second optical sensor (2') at a predefined distance from the first optical sensor (2), the second optical sensor (2') comprising a plurality of sensing units (3'), wherein the second optical sensor (2') being adapted for detecting/imaging each of the at least two parts (11, 12, 13) of the scene (6) ;
- imaging the at least two parts (11, 12, 13) of the scene (6) simultaneously onto the first optical sensor (2) and onto the second optical sensor (2') ; and
- triangulating detection points of images obtained on said first optical sensor (2) with detection points of images obtained said second optical sensor (2') such as to obtain the depth of the scene.

9. A method according to any one of the preceding claims, wherein the method comprises the step of constructing the scene (6) in progressively as the scene (6) is scanned, based on 3D points obtained during scanning, wherein one 3D point is obtained at each time step.

10. A method according to any of the preceding claims, wherein each of the scanned light beams (62, 64) in a part (11) of the scene (6) is spaced by a predetermined spacing (65, 66) with respect to the scanned light beams (63) in another part (12) of the scene (6), such that said light beams (62, 63, 64) do not overlap when overlaying the parts (11, 12) of the scene (6) on one another.

11. An optical sensing system for optical sensing of a scene comprising :
- a first optical sensor (2) comprising a plurality of sensing units (3), wherein the optical sensor (2) is adapted for imaging at least at least two parts (11, 12, 13) of the scene and such that each sensing unit (3) of said optical sensor (2) corresponds to at least two different points or areas (8, 8', 8") on said scene (6), wherein each point or area (8, 8', 8") of said at least two different points or areas (8, 8', 8") corresponds to a different part (11, 12, 13) of said at least two different parts (11, 12, 13);
- a light beam projector (3) for projecting a light beam on the scene;
- scanning means adapted to scan the light beam on the scene along a trajectory;
- a processor configured for
∘ receiving inputs including at least two dimensions X, Y of the scene,
∘ defining a plurality of parts of the scene;
∘ receiving image/detection data's from the sensing units of the first optical sensor;
∘ determining the positions of light spots (8, 9, 10) projected on each part (11, 12, 13) of the scene (6) at any time of scanning on basis of:
• a determined position of the projection vector direction of the light beam (5) on the scene (6) in at the said time of scanning and/or;
• a measurement of each light spot (8, 9, 10) position by a sensing unit (3) of the optical sensor (2) at the said time of scanning.

12. An optical sensing system according to claim 11 further comprising at least one optic between the scene (6) and the optical sensor (2), wherein the optic is configured to project an image of each of the parts (11, 12, 13) onto the optical sensor (2), and/or wherein a first optic is configured to image a first part onto the first optical sensor, and a second optic is configured to image a second part onto the first optical sensor.

13. An optical sensing system according to any one of claims 11 to 12 wherein the processor configured for filtering the detection of a light spot by a sensing unit at any time during scanning, based on consecutive detection of a light spot by one sensing unit, and/or based on detections of a light spot by one or more vicinal sensing units.

14. An optical sensing system according to any one of the claims 11 to 13, further comprising a second optical sensor (2') at a predefined distance from the first optical sensor (2), the second optical sensor (2') comprising a plurality of sensing units (3'), wherein the second optical sensor (2') is adapted for detecting/imaging each of the at least two parts (11, 12, 13) of the scene (6) ;
the processor being further configured for receiving image/detection data's from the sensing units of the second optical sensor (2'), and for triangulating detection points of images obtained on said first optical sensor (2) with detection points of images obtained said second optical sensor (2') such as to obtain the depth of the scene, or triangulating detection points of images obtained on said first optical sensor (2) with instantaneous position of said light beam.

15. A wearable device comprising the optical sensing system according to any one of the claims 11 to 14.
